(19) **Europäisches Patentamt**
**European Patent Office**
**Office européen des brevets**

(11) **EP 1 975 030 B1**

(12) **EUROPEAN PATENT SPECIFICATION**

(45) Date of publication and mention
of the grant of the patent:
**28.09.2011 Bulletin 2011/39**

(51) Int Cl.:
*B60W 30/18* *(2006.01)* *B60W 10/06* *(2006.01)*
*B60W 10/10* *(2006.01)* *F16H 61/04* *(2006.01)*
*F16H 61/02* *(2006.01)* *F02D 41/00* *(2006.01)*

(21) Application number: **08251123.9**

(22) Date of filing: **27.03.2008**

(54) **Control apparatus and control method for a vehicle**

Steuervorrichtung und Steuerverfahren für ein Fahrzeug

Appareil de contrôle et procédé de contrôle pour véhicule

(84) Designated Contracting States:
**DE FR GB**

(30) Priority: **29.03.2007 JP 2007088326**

(43) Date of publication of application:
**01.10.2008 Bulletin 2008/40**

(73) Proprietor: **Toyota Jidosha Kabushiki Kaisha
Toyota-shi, Aichi 471-8571 (JP)**

(72) Inventor: **Terada, Yasuyuki
Toyota-shi
Aichi-ken 471-8571 (JP)**

(74) Representative: **Albutt, Anthony John
D Young & Co LLP
120 Holborn
London EC1N 2DY (GB)**

(56) References cited:
**EP-A2- 0 930 426 EP-A2- 1 413 724
WO-A1-2006/031167 FR-A1- 2 795 773
FR-A2- 2 663 370 US-A- 5 058 015
US-A- 5 476 425**

## Description

BACKGROUND OF THE INVENTION

1. Field of the Invention

The invention relates to a control apparatus and a control method for a vehicle.

2. Description of the Related Art

In a vehicle such as an automobile that employs related art, a diesel engine is provided as the prime mover and rotation from the engine side is transmitted to the wheel side via an automatic transmission. Here, the fuel injection quantity in the diesel engine is limited to at most a maximum injection quantity that can be set based on various parameters related to engine operation. Also, the automatic transmission includes a torque converter and a gear shift mechanism, and establishes a plurality of gears with different gear ratios by selectively applying a plurality of apply elements such as clutches and brakes so as to switch the power transmitting path in the gear shift mechanism.

The apply elements such as the clutches and brakes in the automatic transmission operate based on the hydraulic pressure of hydraulic fluid that is supplied through a hydraulic control circuit, and are switched between an applied state and a released state by adjusting this hydraulic pressure through controlling the operation of various solenoid valves provided in this hydraulic control circuit. The gear (i.e., speed) of the automatic transmission is shifted by operating the apply elements in the following manner. That is, in response to a shift command, hydraulic pressure applied to a predetermined apply element is reduced such that that apply element releases (hereinafter this apply element will be referred to as the "release-side apply element"), while hydraulic pressure applied to another predetermined apply element is increased according to a hydraulic pressure command value such that that apply element applies (hereinafter this apply element will be referred to as the "apply-side apply element"). The apply and release of these apply elements in this way results in a gear shift that is based on the shift command.

Incidentally, when shifting gears in the automatic transmission, in order to shift into a lower gear without imparting an unpleasant sensation to the driver, the apply-side apply element is preferably applied gradually to inhibit sudden engine braking that would otherwise occur when the apply-side apply element is applied. Although gradually applying the apply-side apply element when shifting into a lower gear in this way does delay the completion of the shift, it also eliminates the unpleasant sensation related to sudden engine braking from that shift that is imparted to the driver.

Vehicles in recent years are being provided with a plurality of shift modes, i.e., an automatic mode and a manual mode, for shifting gears in the automatic transmission. In the automatic mode, the gear is automatically shifted according to the running state of the vehicle. In the manual mode, the gear is shifted in response to a manual shift operation by the driver of the vehicle. Vehicles that allow the driver to appropriately switch between these modes are now in common usage. The manual mode in these kinds of vehicles is often selected when the driver wishes to shift gears with good response to a shift operation by the driver (i.e., good shift response), such as during sporty driving. Accordingly, when there is a command to shift into a lower gear while in the manual mode, it is conceivable that, instead of the apply-side apply element being applied gradually when shifting into a lower gear, the shift may be performed in the following manner to comply with the drivers' wishes.

That is, when there is a command to shift into a lower gear in the automatic transmission through a shift operation by the driver, the release-side apply element is quickly released so that the automatic transmission is placed in a neutral state, and then the engine speed is increased to a value that would not result in excessive engine braking (i.e., shift shock), i.e., to a value that would not result in an unpleasant sensation being imparted to the driver, even if the apply-side apply element was suddenly applied. Then, while the engine speed is elevated, the automatic transmission is shifted into a lower gear (i.e., a downshift is performed) by quickly applying the apply-side apply element. Shifting into a lower gear in this way makes it possible to suppress a response delay in a shift into a lower gear with respect to a shift operation by the driver.

Incidentally, the technology described in Japanese Patent Application Publication No. 10-281276 (JP-A-10-281276) is one example of technology that increases the engine speed before applying the apply-side apply element JP-A-10-281276 describes technology that increases the engine speed during a shift into a lower gear by opening an idle speed control valve in a gasoline engine, and by adjusting the fuel injection quantity in a diesel engine. Accordingly, the engine speed before the apply-side apply element is applied in a diesel engine is increased by adjusting (i.e., increasing) the fuel injection quantity. Also, when increasing the engine speed in this way, the engine speed may be increased quickly by increasing the fuel injection quantity in the diesel engine to a maximum injection quantity determined by the various parameters in order to shift into a lower gear with good response to a shift operation by the driver.

When the automatic transmission shifts into a lower gear based on a shift operation by the driver, a response delay in the shift with respect to the shift operation can be suppressed by first placing the automatic transmission in a neutral state by releasing the release-side apply element, and then increasing the engine speed by increasing the fuel injection quantity to the maximum injection quantity, and quickly applying the apply-side apply element. However, even if the response delay in the shift with respect to the shift operation by the driver is suppressed in this way, it is difficult to satisfy the demand of the driver to shift gears with good shift response by that measure alone.

European Patent Application EP1413724 discloses a control system for an internal combustion engine which controls a fuel injection amount depending upon the power requirement for an engine, and controls the EGR amount adjusting means for adjusting an amount of exhaust gas recirculated from an exhaust passage to an intake passage, based on the fuel injection amount. Intentional Patent Application WO2006/03116 discloses a device relating to control of the fuel pressure in a common rail engine in connection with an automatic gearshift procedure. French Patent Application FR2795773 discloses a method of smoothing or eliminating the light jerk felt by the driver during gear change. The method involves sending torque control orders to the engine during gear shifting, to modify first and second control parameters, namely the quality of air admitted into the cylinders and the advance angle of ignition.

SUMMARY OF THE INVENTION

This invention thus providers a control apparatus and method for a vehicle, which increases shift response when shifting into a lower gear based on a shift operation by a driver while in a manual mode.

A first aspect of the invention relates to a control apparatus for a vehicle i) which is provided with a diesel engine in which a fuel injection quantity is limited to at most a maximum injection quantity that is variably set based on various parameters related to engine operation, and an automatic transmission which is connected to the diesel engine and inputs rotation from the engine, as well as establishes a plurality of gears, each having a different gear ratio, by selectively applying a plurality of apply elements, and ii) in which a gear shift mode of the automatic transmission is able to be switched between an automatic mode in which the gear is shifted automatically according to a running state of the vehicle and a manual mode in which the gear is shifted according to a manual shift operation, and iii) in which an engine speed is increased by increasing the fuel injection quantity to the maximum injection quantity after the automatic transmission is in a neutral state during a shift in the automatic transmission into a lower gear while in the manual mode, and the shift into the lower gear is executed while the engine speed is elevated. This control apparatus includes a common rail that stores high-pressure fuel to be injected into the diesel engine and a control portion that executes standby control to increase the maximum injection quantity by correcting a fuel pressure in the common rail, between the time there is a command to shift the automatic transmission into the lower gear while in the manual mode and the time the automatic transmission is placed in the neutral state. The correction includes at least control to increase the fuel pressure in the common rail.

According to the control apparatus for a vehicle having this structure, after there is a command to shift the automatic transmission which is in the manual mode into a lower gear and the automatic transmission is in a neutral state, the fuel injection quantity can be made a larger value than the value of the maximum injection quantity at the time of the command to shift gears in order to increase the engine speed so that the automatic transmission can be shifted into the lower gear. As a result of increasing the fuel injection quantity, the engine speed can be increased quickly so the automatic transmission can quickly be shifted into the lower gear. Accordingly, the shift into the lower gear in the automatic transmission in the manual mode can be performed with better response to the shift operation by the driver, and as a result, it is possible to satisfy the demand of the driver to shift gears with good response to a shift operation.

The fuel pressure in the common rail is increased to increase the value of the maximum injection quantity by executing the standby control between the time there is a command to shift the automatic transmission into the lower gear in the manual mode and the time the automatic transmission is placed in the neutral state. Therefore, when the fuel injection quantity is increased with the value of the maximum injection quantity as the upper limit in order to increase the engine speed after the automatic transmission is in the neutral state, that value of the maximum injection quantity is larger than it is at the time of the command to shift gears so the engine speed can be increased quickly.

With the control apparatus according to the foregoing structure, the standby control may include control to increase the maximum injection quantity by repeating the correction of the at least one parameter.

Similar effects to those obtained with the foregoing structure are also able to be obtained with this structure.

With the control apparatus of the foregoing structure, increasing the fuel pressure in the common rail may include control to increase the fuel pressure to a target pressure that is set in advance, and a value of the target pressure may be set with a value when the fuel injection quantity in the diesel engine is at the maximum injection quantity as an upper limit. Moreover a value of the target pressure may be set to a value when the fuel injection quantity in the diesel engine is at the maximum injection quantity

Accordingly, when standby control is executed, the target pressure, i.e., the target value of the fuel pressure in the common rail, is increased with the value when the fuel injection quantity in the diesel engine is at the maximum injection quantity, i.e., with the highest value able to be set, as the upper limit, and the fuel pressure is then increased toward that target pressure. As a result, the fuel pressure under standby control can be appropriately and effectively increased.

A second aspect of the invention relates to a control apparatus for a vehicle i) which is provided with a diesel engine in which a fuel injection quantity is limited to at most a maximum injection quantity that is variably set based on various parameters related to engine operation, and an automatic transmission which is connected to the diesel engine and inputs rotation from the engine, as well as establishes a plurality of gears, each having a different gear ratio, by selectively applying a plurality of apply elements, and ii) in which a gear shift mode of the automatic transmission is able to be switched between an automatic mode in which the gear is shifted automatically according to a running state of the vehicle and a manual mode in which the gear is shifted according to a manual shift operation, and iii) in which an engine speed is increased by increasing the fuel injection quantity to the maximum injection quantity after the automatic transmission is in a neutral state during a shift in the automatic transmission into a lower gear while in the manual mode, and the shift into the lower gear is executed while the engine speed is elevated. This control apparatus includes an intake mechanism which draws intake air into the diesel engine via an intake passage and variable changes the intake air amount and a control portion that executes standby control to increase the maximum injection quantity by correcting an intake pressure in the intake passage, between the time there is a command to shift the automatic transmission into the lower gear while in the manual mode and the time the automatic transmission is placed in the neutral state. The correction includes control to drive the intake mechanism so as to increase the intake air amount.

According to the control apparatus for a vehicle having this structure, after there is a command to shift the automatic transmission which is in the manual mode into a lower gear and the automatic transmission is in a neutral state, the fuel injection quantity can be made a larger value than the value of the maximum injection quantity at the time of the command to shift gears in order to increase the engine speed so that the automatic transmission can be shifted into the lower gear. As a result of increasing the fuel injection quantity, the engine speed can be increased quickly so the automatic transmission can quickly be shifted into the lower gear. Accordingly, the shift into the lower gear in the automatic transmission in the manual mode can be performed with better response to the shift operation by the driver, and as a result, it is possible to satisfy the demand of the driver to shift gears with good response to a shift operation.

Accordingly, the pressure in the intake passage is increased in order to make the maximum injection quantity a large value by executing standby control between the time there is a command to shift the automatic transmission into the lower gear while in the manual mode and the time the automatic transmission is placed in the neutral state. When the fuel injection quantity is increased to the maximum injection quantity in order to increase the engine speed after the automatic transmission is in the neutral state, the maximum injection quantity is appropriately set to a large value thereby enabling the engine speed to be quickly increased.

With the control apparatus of the foregoing structure, the intake mechanism may include an EGR mechanism which forces some exhaust gas from the diesel engine to flow into the intake passage and variably changes an EGR amount which is the amount of that exhaust gas. Also, the control to drive the intake mechanism so as to increase the intake air amount may include control to drive the EGR mechanism so as to reduce the EGR amount.

Accordingly, reducing the EGR amount by controlling the EGR mechanism when standby control is being executed enables the amount of fresh air that is drawn into the diesel engine through the intake passage to be increased by a corresponding amount (i.e., by an amount corresponding to the amount of EGR that was reduced). This increases in the amount of fresh air enables the pressure inside the intake passage to be increased. Also, reducing the EGR amount as described above results in more stable combustion of fuel in the diesel engine by an amount corresponding to the amount of reduced the. EGR mount when the fuel injection quantity is increased to the maximum injection quantity after the automatic transmission is in the neutral state. As a result, the engine speed can be increased quickly by increasing the fuel injection quantity to the maximum injection quantity.

Incidentally, the control of the EGR mechanism during standby control may be performed such that the EGR amount decreases to zero.

With the control apparatus having the foregoing structure, the intake mechanism may include a throttle valve that is selectively operated open and closed to variably change an airflow area of the intake passage of the diesel engine, and the control to drive the intake mechanism so as to increase the intake air amount may include control to drive the throttle valve open.

Accordingly, controlling the throttle valve open when standby control is executed enables the amount of fresh air that is drawn into the diesel engine through the intake passage to be increased quickly and appropriately. Therefore, the pressure inside the intake passage can also be increased quickly and appropriately.

Incidentally, the control to open the throttle valve during standby control may be performed such that the throttle valve fully opens.

Third and fourth aspects of the invention relate to control methods for a vehicle when controlling the vehicle using the control apparatus for a vehicle according to the first and second aspects described above.

BRIEF DESCRIPTION OF THE DRAWINGS

The foregoing and further objects, features and advantages of the invention will become apparent from the following description of embodiments with reference to the accompanying drawings, wherein like numerals are used to represent like elements and wherein:

FIG. 1 is a schematic diagram of an engine, an automatic transmission, and their peripheral structures, of a vehicle to which a control apparatus according to one example embodiment can be applied;

FIG. 2 is a view illustrating the structure of the automatic transmission;

FIG. 3 is a clutch and brake application chart showing various apply and release combinations of clutches and brakes to achieve specific gears in the automatic transmission;

FIG. 4 is a map used when setting a target pressure which is a target value of a rail pressure;

FIG. 5 is a time chart showing changes in (a) release-side hydraulic pressure, (b) apply-side hydraulic pressure, and (c) engine speed, when shifting into a lower gear in the automatic transmission;

FIG. 6 is a time chart showing (a) whether there is a downshift operation, (b) the change in release-side hydraulic pressure, (c) the change in an injection quantity command value, (d) the change in engine speed, and (e) the change in apply-side hydraulic pressure, when shifting into a lower gear in the manual mode;

FIG. 7 is a time chart showing (a) whether there is a downshift operation, (b) the change in release-side hydraulic pressure, (c) whether standby control is on or off, (d) the change in rail pressure, (e) the change in an EGR valve opening amount, and (f) the change in a throttle valve opening amount, before, during, and after a standby period;

FIG. 8 is a graph showing the tendency of a target pressure set during the standby period to shift with respect to changes in the engine speed and injection quantity command value;

FIG. 9 is a graph showing the differences in (a) the change in the rail pressure and (b) the change in the engine speed, depending on whether standby control is on or off;

FIG 10 is a graph showing the differences in (a) the change in the EGR valve opening amount and (b) the change in the engine speed, depending on whether standby control is on or off;

FIG. 11 is a graph showing the differences in (a) the change in the throttle valve opening amount and (b) the change in the engine speed, depending on whether standby control is on or off;

FIG 12 is a flowchart (part 1) illustrating a routine that is executed when shifting the automatic transmission into a lower gear based on a shift operation in the manual mode; and

FIG 13 is a flowchart (part 2) illustrating the routine that is executed when shifting the automatic transmission into a lower gear based on a shift operation in the manual mode.

DETAILED DESCRIPTION OF THE EMBODIMENTS

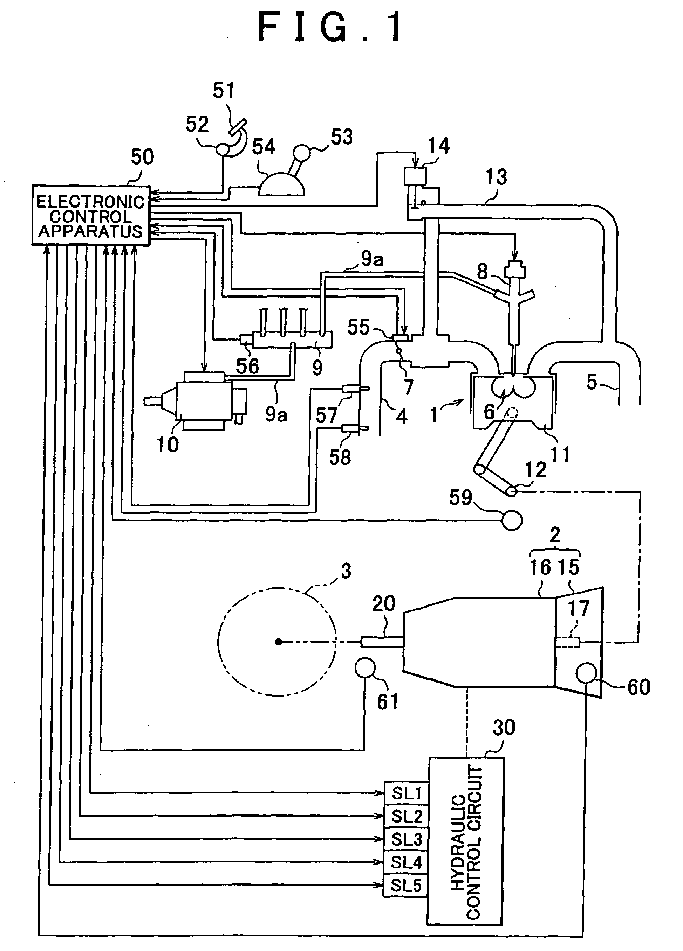

Example embodiments according to the invention of a control apparatus for a vehicle will hereinafter be described with reference to FIGS. 1 to 13. As shown in FIG 1, in this vehicle, a diesel engine 1 is provided as a prime mover and rotation from the engine 1 side is transmitted to wheels 3 via an automatic transmission 2 and the like.

In the diesel engine 1, an intake passage 4 that makes up part of the intake system of the engine 1 and an exhaust passage 5 that makes up part of the exhaust system of the engine 1 are connected to a combustion chamber 6 of each cylinder in the diesel engine 1. The intake passage 4 is provided with a throttle valve 7 that opens and closes to variably change the airflow area of the intake passage 4.

Also, a fuel injector 8 that injects fuel supplied for combustion in the combustion chamber 6 is arranged in the combustion chamber 6 of each cylinder of the diesel engine 1. The fuel injector 8 of each cylinder is connected to a common rail 9 via a high-pressure fuel supply line 9a and high-pressure fuel is supplied to the common rail 9 via a fuel pump 10. When fuel that was injected into the combustion chamber 6 from the fuel injector 8 is combusted after air is drawn into the combustion chamber 6 from the intake passage 4, a piston 11 is driven in a reciprocating motion such that a crankshaft 12 of the diesel engine 1 rotates. Also, exhaust gas produced from combusting the fuel in the combustion chamber 6 is discharged into the exhaust passage 5.

This diesel engine 1 is provided with an exhaust gas recirculation (hereinafter simply referred to as "EGR") mechanism that recirculates some of the exhaust gas into the air in the intake passage 4. This EGR mechanism includes an EGR passage 13 that provides communication between the exhaust passage 5 and the intake passage 4. The upstream end portion of the EGR passage 13 is connected to the exhaust passage 5. Also, an EGR valve 14 is provided in the EGR passage 13. The downstream end portion of the EGR passage 13 is connected to the intake passage 4 at a location downstream of the throttle valve 7.

On the other hand, the automatic transmission 2 is provided with a torque converter 15 and a gear shift mechanism 16, and establishes a plurality of gears having different gear ratios by selectively applying apply elements such as clutches and brakes so as to switch the power transmitting path in the gear shift mechanism 16.

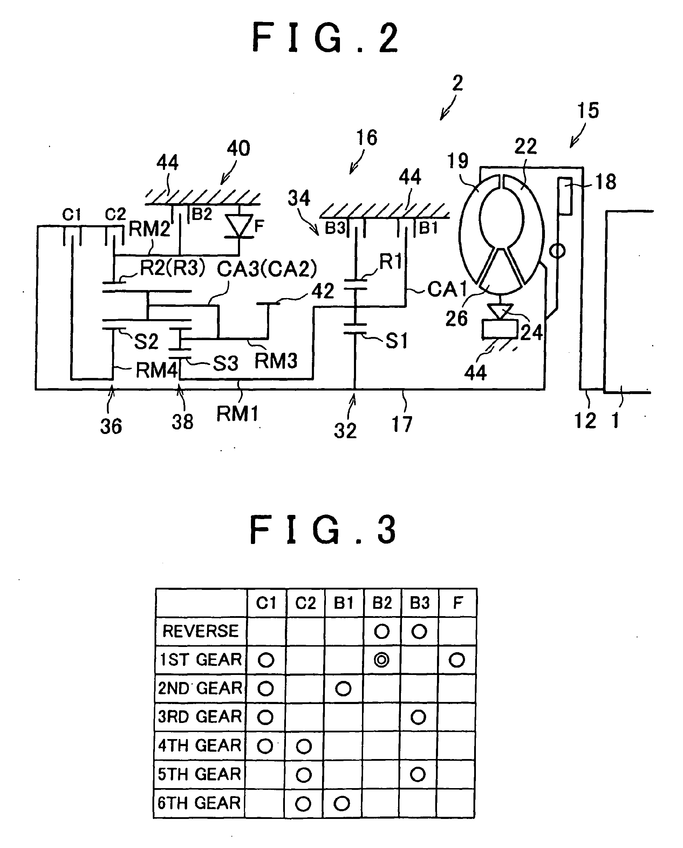

FIG 2 is a diagram showing the structure of the automatic transmission 2. Incidentally, this automatic transmission 2 has a structure that is generally vertically symmetrical with respect to a center line. Accordingly, the portion below the center line is omitted in FIG 2.

As shown in the FIG 2, the automatic transmission 2 includes the torque converter 15 that transmits power between the diesel engine 1 side and the gear shift mechanism 16 using hydraulic fluid, and a lockup clutch 18 that can directly connect (i.e., lock) the crankshaft 12 of the diesel engine 1 to a turbine shaft 17 which serves as an input shaft of the gear shift mechanism 16. The torque converter 15 includes a pump impeller 19 that is connected to the crankshaft 12 of the diesel engine 1, a turbine runner 22 that is connected to the turbine shaft 17 that serves as the input shaft of the gear shift mechanism 16, and a stator 26 that is prevented from rotating in one direction by a one-way clutch 24. The hydraulic fluid is provided between the pump impeller 19 and the turbine runner 22. This hydraulic fluid is used to transmit power between the diesel engine 1 side and the gear shift mechanism 16 side. Also, a hydraulic pump, not shown, is connected to the pump impeller 19. This hydraulic pump is operatively linked to the diesel engine 1 and pumps hydraulic fluid at a predetermined base pressure which is supplied to a hydraulic control circuit 30, which will be described later, the lockup clutch 18, and various portions of the automatic transmission 2 that need to be lubricated.

The gear shift mechanism 16 includes a first transmitting portion 34 and a second transmitting portion 40 that are arranged on the same axis. The first transmitting portion 34 is mainly formed of a single pinion type first planetary gear set 32, while the second transmitting portion 40 is mainly formed of a single pinion type second planetary gear set 36 and a double pinion type third planetary gear set 38. This gear shift mechanism 16 is able to establish predetermined gears by selectively applying two apply elements from among a plurality of apply elements, i.e., a first clutch C1, a second clutch C2, a first brake B1, a second brake B2, and a third brake B3. Also, the first clutch C1, the second clutch C2, the first brake B1, the second brake B2, and the third brake B3 are all multiple disc hydraulic friction apply devices that frictionally apply using hydraulic cylinders. In this gear shift mechanism 16, the speed of the rotation that was input from the turbine shaft 17 is changed at a predetermined gear ratio that corresponds to the established gear, and then transmitted to the wheels 3 of the vehicle via an output gear 42, a differential gear(not shown), and an output shaft 20 (see FIG 1).

The first planetary gear set 32 that makes up the first transmitting portion 34 includes three rotating elements, i.e., a sun gear S1, a carrier CA1, and a ring gear R1. The sun gear S1 is integrally connected to the turbine shaft 17 so that it rotates together with it. When the ring gear R1 is fixed by the third brake B3 to a housing 44 so as to be held against rotation, the carrier CA1 rotates at a slower speed than the turbine shaft 17.

Also, portions of the second planetary gear set 36 and the third planetary gear set 38, which make up the second transmitting portion 40, are connected together and form four rotating elements RM1, RM2, RM3, and RM4. More specifically, the sun gear S3 of the third planetary gear set 38 makes up the first rotating element RM1, the ring gear R2 of the second planetary gear set 36 and the ring gear R3 of the third planetary gear set 38 are connected together and make up the second rotating element RM2. Also, the carrier CA2 of the second planetary gear set 36 and the carrier CA3 of the third planetary gear set 38 are connected together and make up the third rotating element RM3, and the sun gear S2 of the second planetary gear set 36 makes up the fourth rotating element RM4. That is, the second planetary gear set 36 and the third planetary gear set 38 together make up a Ravigneaux type planetary gear train in which the carriers CA2 and CA3 are integrally formed together, the ring gear R2 and R3 are formed of a common member, and the pinion gears of the second planetary gear set 36 also serve as second pinion gears of the third planetary gear set 38.

The first rotating element RM1 can be selectively connected to the housing 44 by the first brake B1, and the second rotating element RM2 can be selectively connected to the housing 44 by the second brake B2, thereby preventing relative rotation of the first and second rotating elements RM1 and RM2. The fourth rotating element RM4 can be selectively connected to the turbine shaft 17 by the first clutch C1, and the second rotating element RM2 can be selectively connected to the turbine shaft 17 by the second clutch C2, such that the fourth rotating element RM4 and the second rotating element RM2 can be made to rotate together with the turbine shaft 17. The first rotating element RM1 is integrally connected to the carrier CA1 of the first planetary gear set 32 so it rotates together with the carrier CA1, and the third rotating element RM3 is integrally connected to the output gear 42 so it rotates together with the output gear 42 to output power. Incidentally, a one-way clutch F that prevents the second rotating element RM2 from rotating in reverse while allowing it to rotate normally, i.e., in the same direction as the direction in which the turbine shaft 17 rotates, is provided in parallel with the second brake B2 between the second rotating element RM2 and the housing 44.

The clutch and brake application chart in FIG 3 shows the relationships between the operating states of the apply elements, i.e., the first clutch C1, the second clutch C2, the first brake B1, the second brake B2, and the third brake B3, and the gears (i.e., reverse, 1st gear through 6th gear) that can be established. In the chart, a circle indicates that the clutch or brake is applied and a double circle (i.e., bulls-eye) indicates that the clutch or brake is applied during engine braking or the like. Incidentally, the gear ratio of reverse, which is the gear for running the vehicle in reverse, and the gear ratios for 1st gear through 6th gear, which are gears for running the vehicle forward, are set appropriately according to the gear ratios of the first planetary gear set 32, the second planetary gear set 36, and the third planetary gear set 38.

The operating states of the apply elements when the gears are established, as well as the resultant operation of the gear shift mechanism 16 will hereinafter be described for each gear, i.e., reverse, and 1st gear through 6th gear. When establishing reverse which is the gear for running the vehicle in reverse, both the second brake B2 and the third brake B3 are applied. Accordingly, the second rotating element RM2 is prevented from rotating relative to the housing 44 and the first rotating element RM1 rotates slower than the first transmitting portion 34 such that reverse, which is a reverse gear for running the vehicle in reverse, is established and the third rotating element RM3 rotates in reverse at a speed that corresponds to reverse.

When establishing first gear which is the lowest forward gear, the first clutch C1 and the second brake B2 are both applied. However, during acceleration, the second brake B2 does not necessarily have to be applied as described above. This is because the second brake B2 and the one-way clutch F are provided in parallel as described above, and during acceleration the one-way clutch F operates just like the second brake B2 does when it is applied. When the first clutch C1 and either the second brake B2 or the one-way clutch F are applied, the fourth rotating element RM4 rotates together with the turbine shaft 17 while the second rotating element RM2 is prevented from rotating with respect to the housing 44 such that 1st gear, which is a forward gear for making the vehicle run forward, is established. As a result, the third rotating element RM3 that is connected to the output gear 42 rotates at a speed corresponding to 1st gear.

When establishing 2nd gear, which is a gear having a higher gear ratio than 1st gear, the first clutch C1 and the first brake B1 are both applied. Accordingly, the fourth rotating element RM4 rotates together with the turbine shaft 17 while the first rotating element RM1 is prevented from rotating relative to the housing 44 such that 2nd gear, which is a forward gear, is established. As a result, the third rotating element RM3 rotates at a speed corresponding to 2nd gear.

When establishing 3rd gear, which is a gear having a higher gear ratio than 2nd gear, the first clutch C1 and the third brake B3 are both applied. Accordingly, the fourth rotating element RM4 rotates together with the turbine shaft 17 while the first rotating element RM1 rotates at a slower speed than the first transmitting portion 34. As a result, 3rd gear, which is a forward gear, is established and the third rotating element RM3 rotates at a speed corresponding to 3rd gear.

When establishing 4th gear, which is a gear having a higher gear ratio than 3rd gear, the first clutch C1 and the second clutch C2 are both applied such that the second transmitting portion 40 rotates together with the turbine shaft 17. As a result, 4th gear, which is a forward gear, is established and the third rotating element RM3 rotates at a speed corresponding to 4th gear.

When establishing 5th gear, which is a gear having a higher gear ratio than 4th gear, the second clutch C2 and the third brake B3 are both applied such that the second rotating element RM2 rotates together with the turbine shaft 17 while the first rotating element RM1 rotates at a slower speed than the first transmitting portion 34. As a result, 5th gear, which is a forward gear, is established and the third rotating element RM3 rotates at a speed corresponding to 5th gear.

When establishing 6th gear, which is a gear having a higher gear ratio than 5th gear, the second clutch C2 and the first brake B1 are both applied such that the second rotating element RM2 rotates together with the turbine shaft 17 while the first rotating element RM1 is prevented from rotating relative to the housing 44. As a result, 6th gear, which is a forward gear, is established and the third rotating element RM3 rotates at a speed corresponding to 6th gear.

Next, the electrical configuration of the control apparatus for a vehicle in this example embodiment will be described with reference to FIG 1. The vehicle has an electronic control apparatus 50 that executes various controls relating to the diesel engine 1 and the automatic transmission 2 and the like. The electronic control apparatus 50 includes a CPU that executes various computations and processing related to these controls, ROM in which programs and data necessary for those controls are stored, RAM in which the computation results from the CPU and the like are temporarily stored, and input/output ports for inputting and outputting signals with respect to various equipment.

Various sensors and the like are connected to the input port of the electronic control apparatus 50. These sensors include an accelerator position sensor 52, a shift position sensor 54, a throttle position sensor 55, a rail pressure sensor 56, an intake pressure sensor 57, an intake temperature sensor 58, an NE sensor 59, an input rotation speed sensor 60, and an output rotation speed sensor 61, each of which will now be described. The accelerator position sensor 52 detects the depression amount (i.e., accelerator depression amount) of an accelerator pedal 51 that is depressed by the driver of the vehicle.

The shift position sensor 54 outputs a signal indicative of the position of a shift lever 53 that is operated by the driver. The throttle position sensor 55 detects the opening amount of the throttle valve 7 of the diesel engine 1.

The rail pressure sensor 56 detects the pressure (i.e., rail pressure) of high-pressure fuel inside the common rail 9. The intake pressure sensor 57 detects the pressure (i.e., intake pressure) inside the intake passage 4 of the diesel engine 1.

The intake temperature sensor 58 detects the temperature (i.e., intake temperature) of the air passing through the intake passage 4 of the diesel engine 1. The NE sensor 59 detects the engine speed, i.e., the rotation speed of the crankshaft 12.

The input rotation speed sensor 60 detects the rotation speed of the turbine shaft 17 which is the input shaft of the gear shift mechanism 16, and the output rotation speed sensor 61 detects the rotation speed of an output shaft 20 of the gear shift mechanism 16.

The output port of the electronic control apparatus 50 is connected to drive circuits of the throttle valve 7, the EGR valve 14, the fuel injector 8, and the fuel pump 10 and the like, as well as to drive circuits of first to fifth solenoid valves SL1 to SL5 provided in the hydraulic control circuit 30 for shifting gears in the automatic transmission 2.

The hydraulic control circuit 30 supplies hydraulic fluid to the apply elements, i.e., the first clutch C1, the second clutch C2, the first brake B1, the second brake B2, and the third brake B3. Also, the first to the fifth solenoid valves SL1 to SL5 provided in the hydraulic control circuit 30 individually operate the corresponding apply elements, i.e., the first clutch C1, the second clutch C2, the first brake B1, the second brake B2, and the third brake B3, by adjusting the hydraulic pressure that is applied to those apply elements.

The electronic control apparatus 50 outputs a command signal to the drive circuits of various equipment connected to the output port according to the running state of the vehicle and the operating state of the engine which is ascertained from the detection signals that are input from the various sensors described above. In this way, the electronic control apparatus 50 executes various controls such as opening amount control of the throttle valve 7, EGR control that is based on the opening amount control of the EGR valve 14, fuel injection quantity control of the fuel that is injected from the fuel injector 8, control of the fuel pressure (i.e., rail pressure) in the common rail 9, and gear shift control (i.e., shift control) of the automatic transmission 2 and the like.

Here, of these various controls, the fuel injection quantity control and the rail pressure control of the diesel engine 1, together with the shift control of the automatic transmission 2 will each be described in detail.

The fuel injection quantity control of the diesel engine 1 is realized by calculating an injection quantity command value Qfin based on the engine operating state such as the accelerator depression amount and the engine speed, and driving the fuel injector 8 so that fuel of a quantity corresponding to that injection quantity command value Qfin is injected. Incidentally, an upper limit guard is imposed on the injection quantity command value Qfin using a maximum injection quantity Qfull that is variably set based on various parameters related to engine operation, more specifically, the rail pressure, the intake pressure, and the intake temperature and the like. This maximum injection quantity Qfull is a value that serves to prevent too much fuel from being injected, and represents the maximum value for the amount of fuel that can be injected from the fuel injector 8 when the accelerator pedal 51 is depressed as far as it can go, i.e., when the accelerator depression amount is at the maximum. Imposing the upper limit guard on the injection quantity command value Qfin using this maximum injection quantity Qfull limits the fuel injection quantity in the diesel engine 1 to at most the maximum injection quantity Qfull in an attempt to prevent too much fuel from being injected.

The maximum injection quantity Qfull is calculated using the following Expression (1) based on a base value qb, a rail pressure correction coefficient qgr, an intake pressure correction coefficient qgi, and an intake temperature correction coefficient qgt.

$$(1) \quad Qfull = qb \times qgr \times qgi \times qgt$$

The method for calculating the terms used in Expression (1), i.e., the base value qb, a rail pressure correction coefficient qgr, an intake pressure correction coefficient qgi, and an intake temperature correction coefficient qgt, will now be described.

The base value qb is a theoretical maximum value for the fuel quantity that can be injected from the fuel injector 8, and is calculated so as to decrease as the engine speed increases. The reason for calculating the base value qb in this way is because as the engine speed increases, the period of time during which fuel can be injected from the fuel injector 8 during one cycle in the diesel engine 1 becomes shorter so the amount of fuel that can be injected from the fuel injector 8 during that period of time decreases.

The rail pressure correction coefficient qgr is a value for correcting the value of the maximum injection quantity Qfull based on the rail pressure, and is calculated to correct (i.e., increase) the value of the maximum injection quantity Qfull as the rail pressure increases. The reason for calculating the rail pressure correction coefficient qgr in this way is because as the rail pressure increases, so too does the amount of fuel per unit time that can be injected from the fuel injector 8. Accordingly, the amount of fuel that can be injected from the fuel injection 8 during the period of time within which fuel can be injected from the fuel injector 8 during one cycle in the diesel engine 1 increases.

The intake pressure correction coefficient qgi is a value for correcting the value of the maximum injection quantity Qfull based on the intake pressure, and is calculated to correct (i.e., increase) the value of the maximum injection quantity Qfull as the intake pressure increases. The reason for calculating the intake pressure correction coefficient qgi in this way is because as the intake pressure increases, so too does the amount of intake air during one cycle in the diesel engine 1 so oxygen is unlikely to become insufficient during combustion when the fuel injection quantity is increased.

The intake temperature correction coefficient qgt is a value for correcting the value of the maximum injection quantity Qfull based on the intake temperature, and is calculated so that the maximum injection quantity Qfull becomes a smaller value as the intake temperature decreases. The reason for calculating the intake temperature correction coefficient qgt in this way is because as the intake temperature decreases, the density of the air that is drawn into the diesel engine 1 increases so oxygen is unlikely to become insufficient during combustion when the fuel injection quantity is increased.

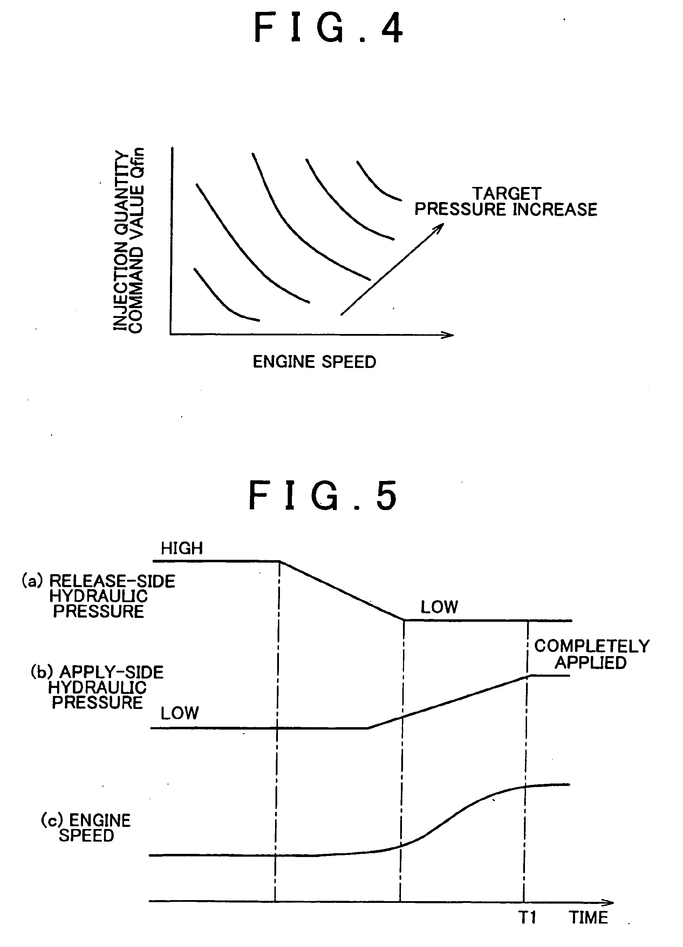

The rail pressure control of the diesel engine 1 is realized by calculating a target pressure, which is a target value for the rail pressure, referencing the map in FIG 4 that is set in advance based on the injection quantity command value Qfin and the engine speed, and driving the fuel pump 10 so that the rail pressure comes to match that target pressure.

Incidentally, the target pressure is calculated to gradually become a smaller value as the engine speed increases on the condition that the injection quantity command value Qfin is constant. This is because as the engine speed increases, the period of time within which fuel can be injected from the fuel injector 8 during one cycle in the diesel engine 1 becomes shorter so it is necessary to increase the rail pressure in order to inject the necessary amount of fuel from the fuel injector 8 during that period of time.

Also, the target pressure, is calculated so as to gradually become a large value as the injection quantity command value Qfin increases on the condition that the engine speed is constant. This is because as the fuel injection quantity increases, more fuel must be injected in the period of time within which fuel can be injected from the fuel injector 8 during one cycle in the diesel engine 1 so it is necessary to increase the rail pressure in order to inject the, necessary amount of fuel from the fuel injector 8 during that period of time.

The shift control in the automatic transmission 2 is realized by independently operating the first to the fifth solenoid valves SL1 to SL5 to apply or release the apply elements so that the gear of the automatic transmission 2 comes to match a specified gear into which the automatic transmission 2 is attempting to shift. When shifting gears in the automatic transmission 2 by operating the apply elements, in response to a shift command to shift into that specified gear, hydraulic pressure applied to a predetermined apply element is reduced such that that apply element releases (hereinafter this apply element may also be referred to as the "release-side apply element"), while the hydraulic pressure applied to another predetermined apply element is increased based on a hydraulic pressure command value such that that apply element applies (hereinafter this apply element may also be referred to as the "apply-side apply element"). The apply and release of these apply elements in this way results in a gear shift that is based on the gear shift command. For example, when the automatic transmission 2 is shifting from 3rd gear into 2nd gear, the hydraulic pressure that is applied to the third brake B3 is reduced such that the third brake B3 is released, while the hydraulic pressure that is applied to the first brake B1 is increased based on the hydraulic pressure command value such that the first brake B1 becomes applied, as is shown in the clutch and brake application chart in FIG 3.

FIG 5 is a time chart showing changes in (a) hydraulic pressure that is applied to the apply element to be released (i.e., release-side hydraulic pressure), (b) hydraulic pressure that is applied to the apply element to be applied (i.e., apply-side hydraulic pressure), and (c) engine speed, when shifting into a lower gear in the automatic transmission. When reducing the release-side hydraulic pressure as shown in (a) in FIG 5 while increasing the apply-side hydraulic pressure as shown in (b) in FIG 5 in order to shift into a lower gear, it is preferable to apply the apply-side apply element gradually by gradually increasing the apply-side hydraulic pressure so that the shift is performed without imparting an unpleasant sensation. Although gradually applying the apply-side apply element when shifting into a lower gear in this way does delay the completion of the shift, it also eliminates the unpleasant sensation related to sudden engine braking from that shift that is imparted to the driver. Accordingly, the engine speed at this time gradually increases as shown in (c) in FIG 5 as the apply-side apply element becomes progressively applied, until it finally reaches a value corresponding to the lower gear.

Vehicles in recent years are being provided with a plurality of shift modes, i.e., an automatic mode and a manual mode, for shifting gears in the automatic transmission 2. In the automatic mode, the gear is automatically shifted according to the running state of the vehicle. In the manual mode, the gear is shifted in response to a manual shift operation by the driver of the vehicle. These vehicles, which allow the driver to appropriately switch between these modes, are now in common usage. The switch between these shift modes is performed through a mode switching operation of the shift lever 53 by the driver.

Here, in the automatic mode, a specified gear which is a gear that is appropriate for the operating state of the vehicle is set based on the accelerator depression amount, the vehicle speed, and the position of the shift lever 53 and the like, and the apply elements are operated to establish that specified gear in the automatic transmission 2. Incidentally, the vehicle speed can be obtained based on a detection signal from the output rotation speed sensor 61 or a detection signal from the input rotation speed sensor 60 and the current gear.

On the other hand, in the manually mode, the specified gear is set based on an upshift operation or a downshift operation of the shift lever 53 by the driver, and the apply elements are operated to establish that specified gear in the automatic transmission 2. This kind of manual mode is often selected when the driver wishes to shift gears with good response to a shift operation by the driver (also referred to simply as "good shift response"), such as during sporty driving. Accordingly, when there is a command to shift into a lower gear through a downshift operation of the shift lever 53 in the manual mode, i.e., when the specified gear is lower than the current gear, it is conceivable that the shift may be performed in the following manner to comply with the drivers' wishes.

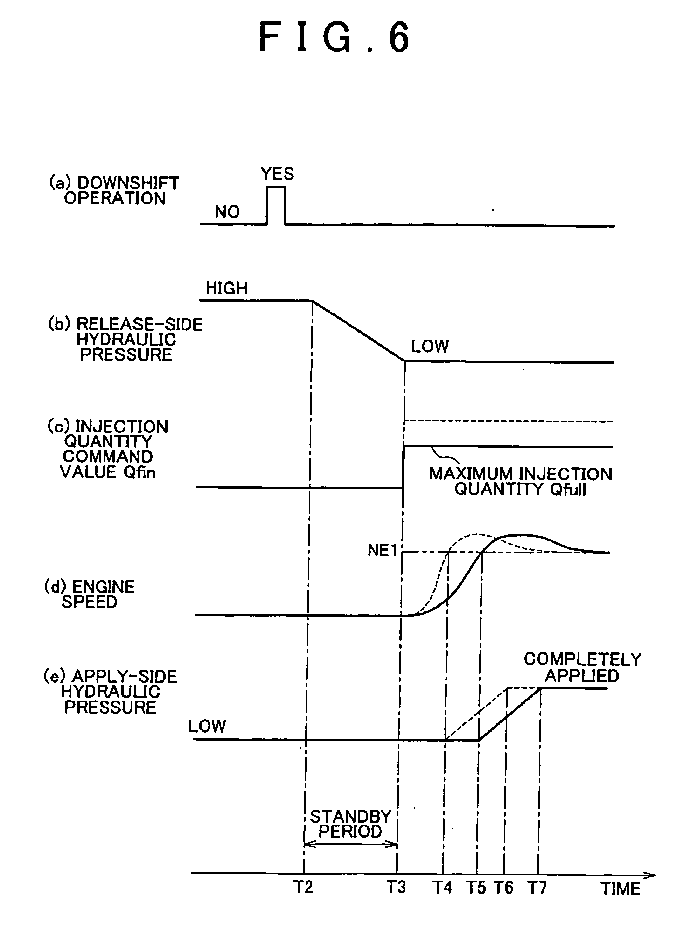

That is, when there is a command to shift into a lower gear based on a downshift operation of the shift lever 53 by the driver (timing T2) as shown in (a) in FIG 6, the hydraulic pressure (i.e., release-side hydraulic pressure) that is applied to the apply element that is in an applied state and is to be released (i.e., the release-side apply element) quickly decreases as shown in (b).

As a result, the release-side apply element is quickly released (T3) thus placing the automatic transmission 2 in a neutral state. Then the engine speed is increased (T5) to a value that would not result in excessive engine braking, i.e., to a value (value NE1 in (d)) that would not result in an unpleasant sensation being imparted to the driver, even if the apply element to be applied (i.e., the apply-side apply element) was suddenly applied, as shown in (d). Then, while the engine speed is elevated in this way, the hydraulic pressure (i.e., apply-side hydraulic pressure) that is applied to the apply-side apply element is quickly increased, as shown by the solid line in (e), so that the apply-side apply element quickly applies, thus resulting in the gear being shifted to the lower gear (T7). Shifting gears to a lower gear in the manner described above makes it possible to suppress a response delay in a shift into a lower gear with respect to a shift operation of the driver. In other words, the period of time from when the downshift operation is performed until the shift into the lower gear is complete (T7) is shortened.

Incidentally, with respect to increasing the engine speed before applying the apply-side apply element, it is preferable to increase the engine speed as quickly as possible in order to perform a shift into a lower gear with good response to a downshift operation of the shift lever 53 by the driver. Therefore, as shown by the solid line in (c) in FIG 6, in order to increase the engine speed as quickly as possible, the injection quantity command value Qfin is set (i.e., increased) to the maximum injection quantity Qfull after timing T3 so that fuel injection quantity in the diesel engine 1 is at the maximum value (i.e., the maximum injection quantity Qfull)), i.e., so that the maximum quantity of fuel that can be injected in the diesel engine 1 is injected.

However, as described above, even if the response delay in a shift into a lower gear with respect to a shift operation of the driver is suppressed by shortening the period of time from when the downshift operation is performed until the shift into the lower gear is complete (T7), it was difficult to satisfy the demand of the driver to shift gears with good shift response by that measure alone.

Therefore, in this example embodiment, standby control, which corrects the value of at least one parameter that does not affect the engine speed from among the various parameters used to variably set the maximum injection quantity Qfull so that the value of the maximum injection quantity Qfull becomes larger than it is at the time of the command for the shift, is executed between the time the downshift is performed and the time the automatic transmission 2 is placed in a neutral state by the release-side apply element being completely released. Incidentally, parameters that do not affect the engine speed are parameters other than the fuel injection quantity, from among the various parameters related to engine operation. Examples of such parameters include intake pressure and rail pressure.

Executing this standby control increases the value of the maximum injection quantity Qfull during a predetermined period of time (hereinafter referred to as the "standby period") between the time the downshift is performed and the time the automatic transmission 2 is placed in a neutral state by the release-side apply element being completely released. Incidentally, the period from after the release-side hydraulic pressure starts to decrease until the automatic transmission 2 is in the neutral state (i.e., T2 to T3) is set as the standby period in this example embodiment. When the fuel injection quantity is set as the maximum injection quantity Qfull in order to increase the engine speed to enable the automatic transmission 2 to shift into the lower gear after the automatic transmission 2 is placed in the neutral state, that maximum injection quantity Qfull is increased, as shown by the broken line in (c) in FIG 6. As a result, the engine speed increases quickly, as shown by the broken line in (d), as a result of changing the fuel injection quantity to the maximum injection quantity Qfull, such that the engine speed reaches the value NE1 earlier at T4 instead of at T5. Also, the timing at which the apply-side apply element is completely applied, i.e., the timing at which the shift in the automatic transmission 2 into the lower gear is complete, is also earlier at T6 instead of at T7. Accordingly, the period of time from when the downshift is performed until the shift into the lower gear is complete (T6) is shortened.

In this way it is possible to shift into a lower gear in the manual mode with better response to a downshift operation of the shift lever 53 by the driver, and therefore possible to satisfy the demand of the driver to shift into a lower gear with good response to that downshift operation.

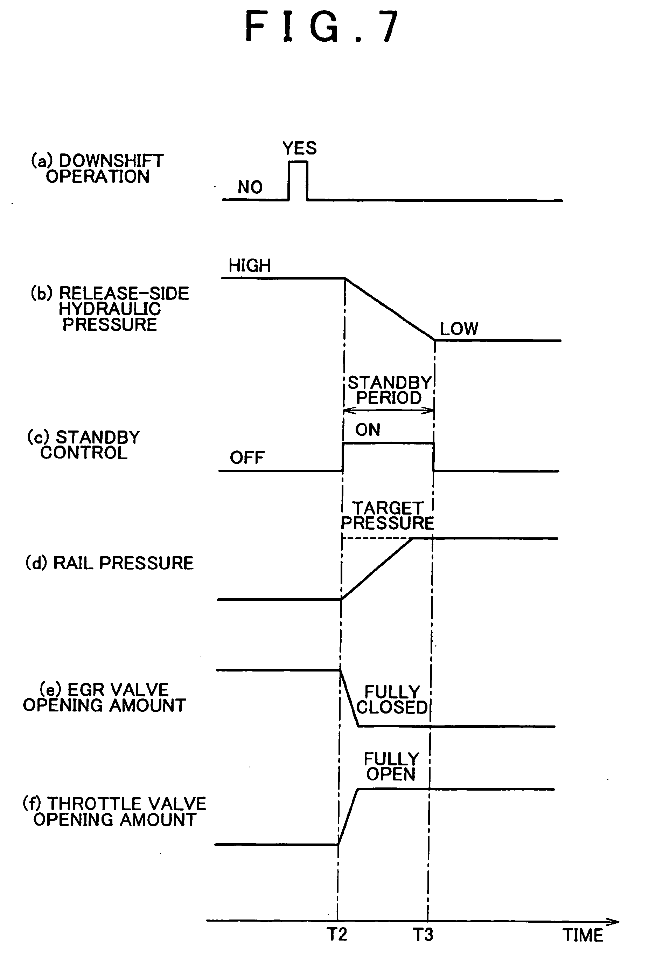

Next, the standby control will be described in detail with reference to the time chart in FIG 7. In the manual mode, a downshift operation is performed as shown in (a) in FIG 7. The standby period during which the standby control shown in (c) in FIG 7 is performed is the period (i.e., T2 to T3) from the time the hydraulic pressure (i.e., release-side hydraulic pressure) that is applied to an apply element that is currently in an applied state and is to be released (i.e., a release-side apply element) starts to decrease, as shown in (b) in FIG 7, in response to that downshift operation until the time the automatic transmission 2 is in a neutral state. The standby control during this standby period includes control that changes the rail pressure and the intake pressure, which are parameters that are used to variably set the maximum injection quantity Qfull and do not affect the engine speed. More specifically, control which increases the rail pressure and control which increases the intake pressure are executed as the standby control. When the rail pressure and the intake pressure are increased by executing these controls, the rail pressure correction coefficient qgr and the intake pressure correction coefficient qgi in Expression (1) above increase such that the maximum injection quantity Qfull that is variably set based on these correction coefficients qgr and qgi increases.

Hereinafter the control for increasing the rail pressure and the control for increasing the intake pressure will each be described in detail.

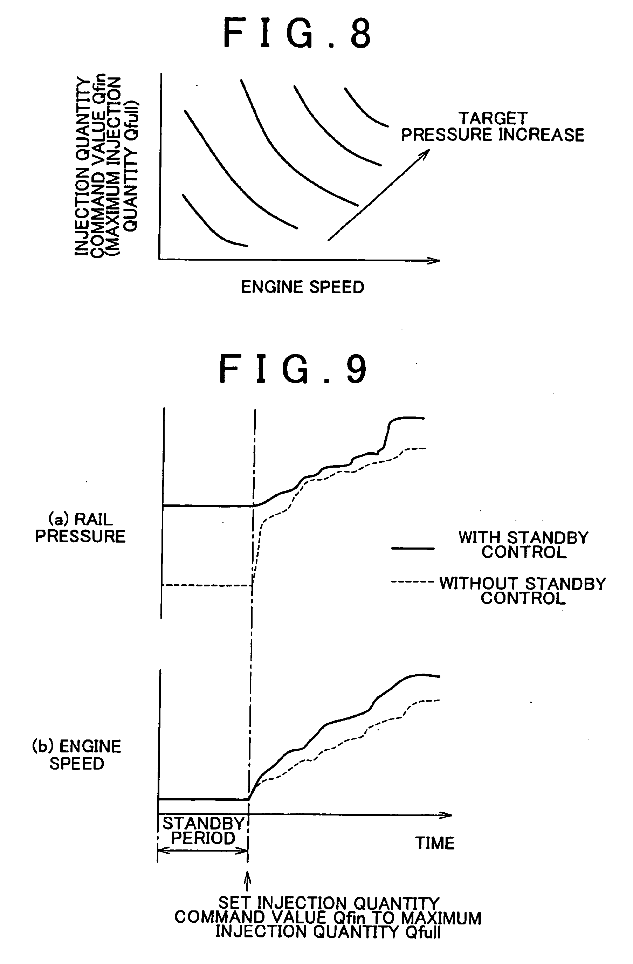

With the control for increasing the rail pressure, a target pressure which is a target value for the rail pressure is increased as much as possible. More specifically, when calculating the target pressure based on the injection quantity command value Qfin and the engine speed, the target pressure is increased as much as possible by calculating it while the injection quantity command value Qfin is at the value of the maximum injection quantity Qfull when setting the target pressure. The target pressure that was calculated in this way indicates the tendency to change with respect to changes in the injection quantity command value Qfin (i.e., the maximum injection quantity Qfull) and the engine speed, as shown in FIG 8. That is, the target pressure is calculated to become a gradually larger value as the engine speed increases on the condition that the injection quantity command value Qfin (i.e., the maximum injection quantity Qfull) is constant, and is calculated to become a gradually larger value as the injection quantity command value Qfin (i.e., the maximum injection quantity Qfull) increases on the condition that the engine speed is constant.

In this manner, when the target pressure is increased as much as possible, as shown by the broken line in (d) in FIG 7, the fuel pump 10 is driven to increase the rail pressure toward that target pressure. Incidentally, in (a) of FIG 9, the broken line indicates the change in the rail pressure during and after the standby period when standby control is not performed (i.e., off), and the solid line indicates the change in the rail pressure during and after the standby period when the standby control is performed (i.e., on). As is evident from the drawing, executing standby control results in an appropriate and effective increase in the rail pressure during the standby period. As a result, the rail pressure correction coefficient qgr in Expression (1) is increased so the maximum injection quantity Qfull immediately after the standby period increases. Accordingly, when the fuel injection quantity is set to the maximum injection quantity Qfull after the standby period ends, the engine speed quickly increases, as shown by the solid line in (b) in FIG 9. Incidentally, if standby control (i.e., the rail pressure increase) is not performed at this time, the engine speed increases only gradually, as shown by the broken line (b) in FIG. 9.

In the control for increasing the intake pressure, the throttle valve 7 and the EGR mechanism which is the intake mechanism that variably changes the intake air amount in the diesel engine 1 are driven so that the amount of intake air increases. More specifically, the EGR valve 14 of the EGR mechanism is controlled so that it becomes fully closed, as shown in (e) in FIG 7, while the throttle valve 7 is controlled so that it becomes fully open, as shown in (f) in FIG. 7.

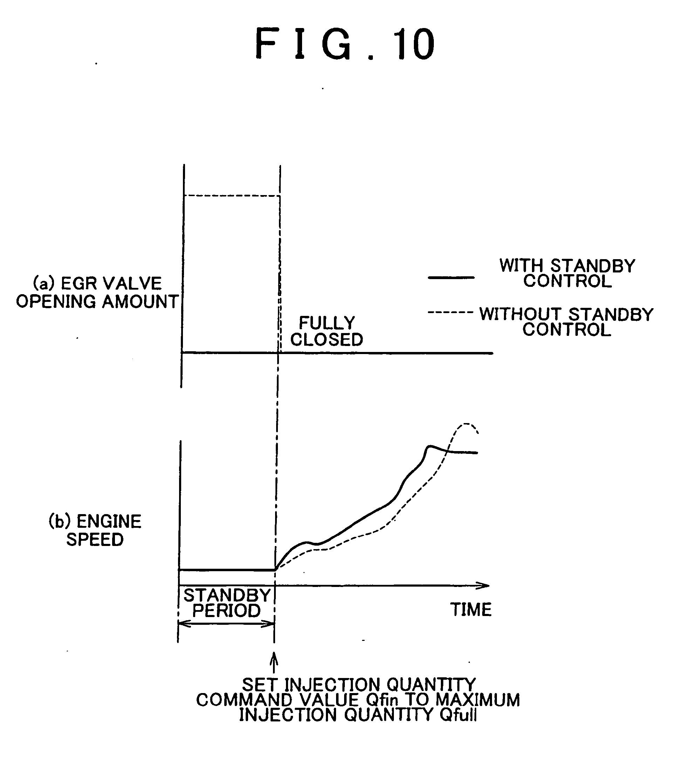

Controlling the EGR valve 14 so that it becomes fully closed, as shown in (e) in FIG 7, refers to driving the EGR mechanism so that the amount of EGR is reduced to zero. Reducing the amount of EGR to zero by driving the EGR mechanism in this way enables the amount of air (i.e., fresh air) that is drawn into the diesel engine 1 through the intake passage 4 to be increased by an amount corresponding to the amount that the EGR was decreased. The intake pressure is thus able to be increased as the amount of this fresh air is increased. Incidentally, in (a) of FIG 10, the broken line indicates the change in the opening amount of the EGR valve 14 during and after the standby period when standby control is not performed (i.e., off), and the solid line indicates the change in the opening amount of the EGR valve 14 during and after the standby period when the standby control is performed (i.e., on). Fully closing the EGR valve 14 during the standby period so that the EGR amount is reduced to zero by executing this standby control results in an increase in the intake pressure in the diesel engine 1. As a result, the intake pressure correction coefficient qgi in Expression (1) is increased so the maximum injection quantity Qfull immediately after the standby period increases. Accordingly, when the fuel injection quantity is set to the maximum injection quantity Qfull after the standby period ends, the engine speed quickly increases, as shown by the solid line in (b) in FIG 10. Also, when the EGR amount is reduced to zero as described above, the amount of exhaust gas present in the combustion chamber 6 during the combustion of fuel is less by that decreased amount so the combustion of fuel becomes more stable. This also helps the engine speed to increase quickly when the fuel injection quantity is increased to the maximum injection quantity Qfull. Incidentally, if standby control is not performed (i.e., if the EGR valve 14 is not closed) at this time, the engine speed increases only gradually, as shown by the broken line (b) in FIG 10.

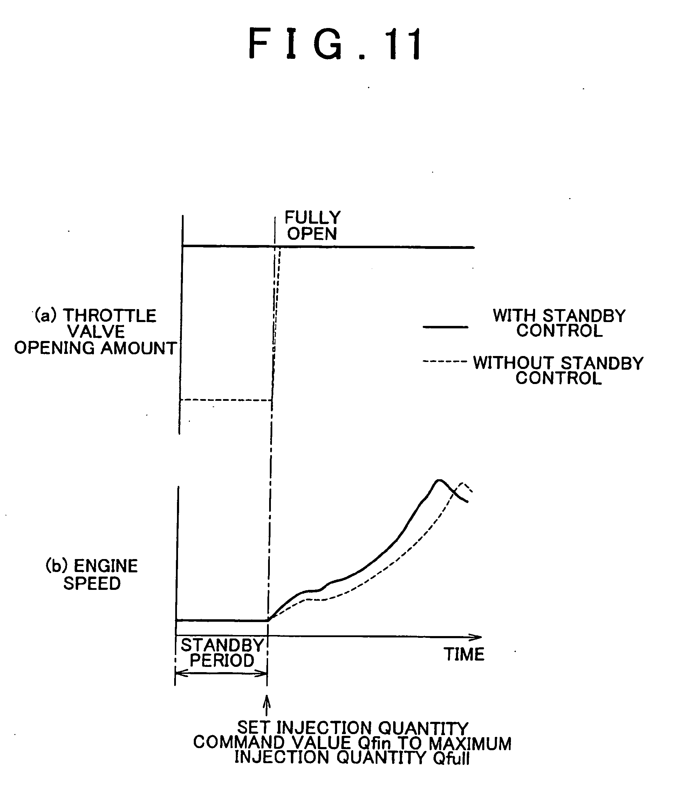

On the other hand, if the throttle valve 7 is controlled so that it becomes fully open, as shown in (f) in FIG 7, the amount of air (i.e., fresh air) that is drawn into the diesel engine 1 through the intake passage 4 quickly increases. As a result, the intake pressure is also able to be quickly increased. Incidentally, in (a) of FIG 11, the broken line indicates the change in the opening amount of the throttle valve 7 during and after the standby period when standby control is not performed (i.e., off), and the solid line indicates the change in the opening amount of the throttle valve 7 during and after the standby period when the standby control is performed (i.e., on). Fully opening the throttle valve 7 during the standby period by executing this standby control results in a quick and appropriate increase in the intake pressure in the diesel engine 1. As a result, the intake pressure correction coefficient qgi in Expression (1) is increased so the maximum injection quantity Qfull immediately after the standby period increases. Accordingly, when the fuel injection quantity is set to the maximum injection quantity Qfull after the standby period ends, the engine speed quickly increases, as shown by the solid line in (b) in FIG 11. Incidentally, if standby control is not performed (i.e., if the throttle valve 7 is not opened) at this time, the engine speed increases only gradually, as shown by the broken line (b) in FIG 11.

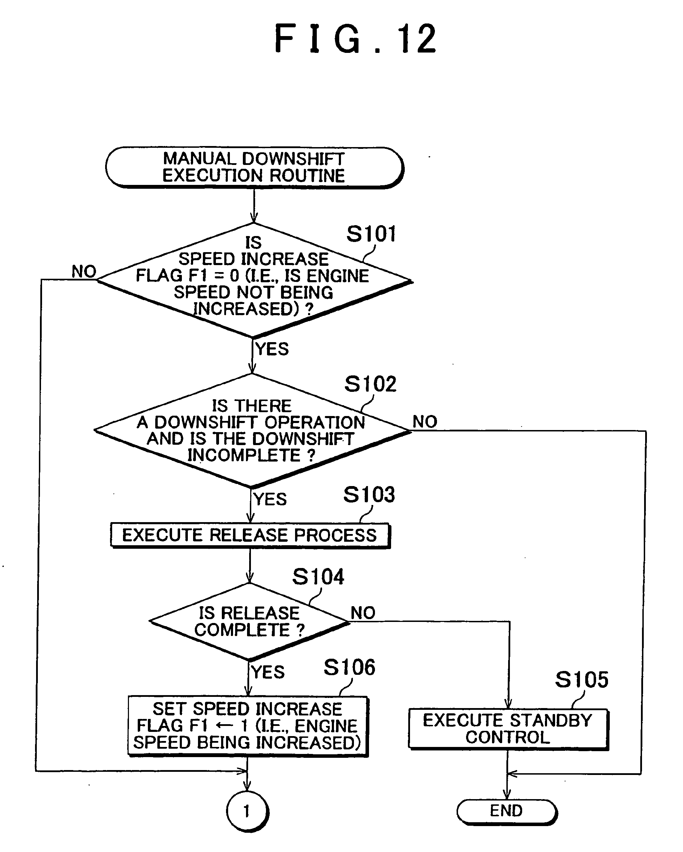

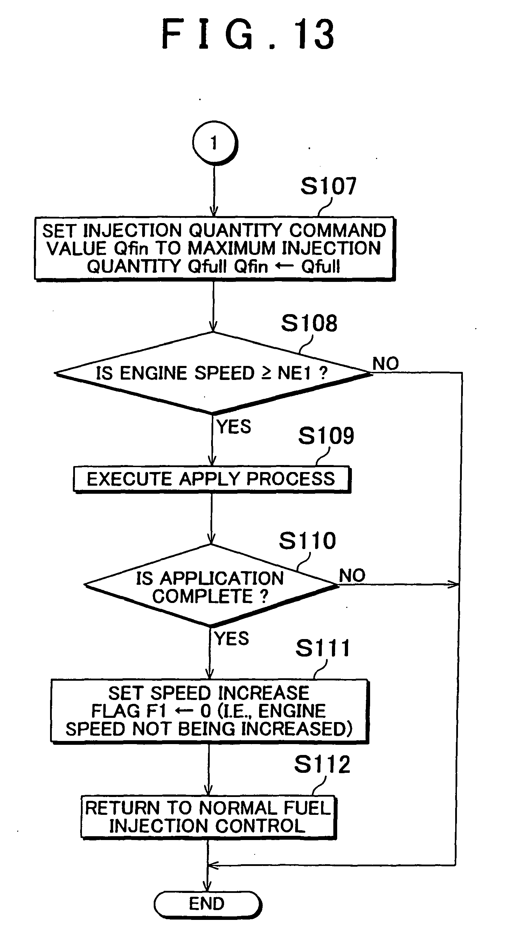

Next, the routine performed when shifting the automatic transmission 2 into a lower gear in response to a downshift operation of the shift lever 53 in the manual mode will be described with reference to the flowcharts in FIGS. 12 and 13 which illustrate a manual downshift execution routine. This manual downshift execution routine is executed by the electronic control apparatus 50 in cycles at predetermined intervals of time, for example, when in the manual mode.

In this routine, first it is determined whether a speed increase flag F1, which is used when determining whether the engine speed after the standby period ends is in the middle of being increased, is 0 (i.e., engine speed is not being increased) (i.e., step S101 in FIG 12). Then it is determined whether there is a downshift operation and a shift into a lower gear in response to that downshift operation is incomplete (i.e., step S102).

If the determinations in both step S101 and S102 are yes, then a release process for releasing an apply element that is to be released from an applied state (i.e., a release-side apply element) is executed when shifting into the lower gear based on the downshift operation (i.e., step S103). More specifically, hydraulic pressure that is applied to the release-side apply element (i.e., release-side hydraulic pressure) is reduced so that the release-side apply element that was applied releases.

During the period from the time the hydraulic pressure that is applied to the apply element starts to decrease after the downshift operation until that apply element is completely released (i.e., NO in step S104), i.e., during the standby period, standby control is executed (i.e., step S105). Accordingly, the rail pressure and the intake pressure are increased during the standby period so that the maximum injection quantity Qfull can be increased. When the apply element is completely released (i.e., YES in step S104), i.e., when the standby period ends, the speed increase flag F1 is set to 1 (i.e., engine speed is being increased) (i.e., step S106). Then a process (steps S 107 onward in FIG 13) for increasing the engine speed and applying an apply element to be applied from a released state (i.e., an apply-side apply element) when shifting into a lower gear is executed. Incidentally, when the speed increase flag F1 becomes 1 (i.e., engine speed is being increased), the determination in step S101 is no and the process skips steps S102 to S106 and proceeds on to step S107.

In the series of steps from step S107 onward, first the injection quantity command value Qfin it set to the value of the maximum injection quantity Qfull in order to increase the engine speed (step S107). As a result, the fuel injection quantity in the diesel engine 1 increases so the engine speed quickly increases. When, as a result of this increase in engine speed, the engine speed reaches the value NE1 that would not result in excessive engine braking even if the apply-side apply element was suddenly applied during the shift into the lower gear (i.e., YES in step S108), an apply process for applying that apply-side apply element is executed (i.e., step S109). More specifically, hydraulic pressure for applying the apply-side apply element (i.e., apply-side hydraulic pressure) is increased so that the apply-side apply element that was released applies.

When the apply-side element is completely applied (i.e., YES in step S110), the shift into the lower gear based on the downshift operation is complete. In this way, performing a shift into a lower gear based on a downshift operation enables that shift to be performed with better response to the downshift operation. As a result, it is possible to satisfy the demand of the driver to shift into a lower gear with good response to that downshift operation. Incidentally, when the shift into the lower gear is complete, the speed increase flag F1 is set to 0 (i.e., engine speed is not being increased) (i.e., step S111), after which control returns to the normal fuel injection control (i.e., step S112).

The example embodiment described in detail above yields the following effects. That is, standby control is executed which changes at least one parameter that does not affect the engine speed, from among the various parameters used to variably set the maximum injection quantity Qfull, so that the value of the maximum injection quantity Qfull becomes larger during the standby period after a downshift operation is performed in the standby mode. By executing this standby control, when the fuel injection quantity is set as the maximum injection quantity Qfull in order to increase the engine speed so as to enable the automatic transmission 2 to shift into the lower gear after the standby period ends, that maximum injection quantity Qfull is increased to a larger value than it is during the shift into the lower gear. As a result, the engine speed increases quickly as a result of increasing the fuel injection quantity to the maximum injection quantity Qfull, such that the shift of the automatic transmission 2 into the lower gear is completed earlier. As a result, a shift into a lower gear based on a shift operation can be performed with better response to that shift operation, and thus it is possible to satisfy the demand of the driver to shift into a lower gear with good response to that downshift operation.

Also, when the manual downshift execution routine is executed in cycles at predetermined intervals of time, the set value of the maximum injection quantity can be increased incrementally (i.e., in steps) a plurality of times during the standby period.

As described above, control to increase the rail pressure is also performed as the standby control described above. By increasing the rail pressure through this control, the rail pressure correction coefficient qgr in Expression (1) is increased such that the value of the maximum injection quantity Qfull during the standby period increases. Accordingly, when the injection quantity command value Qfin is increased to the value of the maximum injection quantity Qfull in order to increase the engine speed, that maximum injection quantity Qfull is a value that is larger than the value during the shift into the low gear so the engine speed can be increased quickly after the standby period ends.

Also, the control to increase the rail pressure is performed by setting the target pressure which is the target value for the rail pressure high. More specifically, when setting the target value based on the injection quantity command value Qfin and the engine speed during the standby period, the target value is set as the value when that injection quantity command value Qfin assumes the value of the maximum injection quantity Qfull. Accordingly, the target value is set higher than it would be if it was not set in this manner. Driving the fuel pump 10 so that the rail pressure increases toward this target value enables the rail pressure to be quickly increased under the standby control.

The target pressure during the standby period is set by increasing the injection quantity command value Qfin to the value of the maximum injection quantity Qfull and referencing the map in FIG 4 based on that injection amount command value Qfin (i.e., the maximum injection quantity Qfull) and the engine speed. Setting the target value in this way obviates the need to prepare (i.e., the time, effort, and cost involved in preparing) a separate map to set the target pressure and the like.

The control to increase the intake pressure can also be performed as the foregoing standby control. By increasing the intake pressure through this control, the intake pressure correction coefficient qgi in Expression (1) is increased such that the value of the maximum injection quantity during the standby period increases. Accordingly, when the injection quantity command value Qfin is increased to the value of the maximum injection quantity Qfull in order to increase the engine speed, that maximum injection quantity Qfull is a large value so the engine speed can be increased quickly after the standby period ends.

Also, the control to increase the intake pressure may be performed by controlling the EGR mechanism so that the EGR amount decreases, i.e., controlling the EGR valve 14 so that it becomes fully closed. Fully closing the EGR valve 14 in this way such that the EGR amount decreases to zero enables the amount of fresh air that is drawn into the diesel engine 1 to be increased by an amount corresponding to the amount that the EGR was decreased. Then the intake pressure can be increased as the amount of this fresh air increases. Also, reducing the EGR amount as described above reduces the amount of exhaust gas present in the combustion chamber 6 during the combustion of fuel by an amount corresponding to the amount of reduced EGR so the combustion of fuel becomes more stable when increasing the engine speed after the standby period ends. This also helps the engine speed to increase quickly.

Moreover, the control to increase the intake pressure may also be performed by controlling the throttle valve 7 so that it becomes fully open. Fully opening the throttle valve 7 in this way quickly increases the amount of air (i.e., fresh air) that is drawn into the diesel engine 1, which enables the intake pressure to be increased quickly.

Incidentally, the foregoing example embodiment, the throttle valve 7 is controlled to become fully open during the standby period. However, the invention is not limited to this. For example, the throttle valve 7 may also be control so that it is open a predetermined amount.

In the foregoing example embodiment, the EGR valve 14 is controlled to become fully closed during the standby period. However, the invention is not limited to this. For example, the EGR valve 14 may also be control so that it is closed a predetermined amount. Further, it is also possible to only execute one of the controls, from among the control to increase the intake pressure and the control to increase the rail pressure, during the standby period.

In the foregoing example embodiment of the invention, the target pressure may be set to a high value in the control to increase the rail pressure by setting that target pressure based on a special map for the standby period or by adding a predetermined value to the target pressure.

In the foregoing example embodiment, the standby period is set to be the period from the time the release-side hydraulic pressure starts to decrease until the release-side apply element is released such that the automatic transmission 2 is in the neutral state. However, the invention is not limited to this. For example, the standby period may also be set to be the period from the time the downshift operation ends until the release-side apply element is released such that the automatic transmission 2 is in the neutral state, instead of the period from the time the release-side hydraulic pressure starts to decrease until the release-side apply element is released such that the automatic transmission 2 is in the neutral state.

In the foregoing example embodiment of the invention, the target pressure may also be set by being calculated according to a calculation formula instead of a map. Also, in the foregoing example embodiment, the target pressure is set to a high value in order to realize the control to increase the rail pressure. However, the invention is not limited to this. For example, the control to increase the rail pressure may also be realized by directly controlling the fuel pump, e.g., by increasing the driving efficiency of the fuel pump.

## Claims

1. A control apparatus for a vehicle i) which is provided with a diesel engine (1) in which a fuel injection quantity is limited to at most a maximum injection quantity that is variably set based on various parameters related to engine operation, and an automatic transmission (2) which is connected to the diesel engine (1) and inputs rotation from the engine (1), as well as establishes a plurality of gears, each having a different gear ratio, by selectively applying a plurality of apply elements, and ii) in which a gear shift mode of the automatic transmission (2) is able to be switched between an automatic mode in which the gear is shifted automatically according to a running state of the vehicle and a manual mode in which the gear is shifted in response to a manual shift operation, and iii) in which an engine speed is increased by increasing the fuel injection quantity to the maximum injection quantity after the automatic transmission (2) is in a neutral state during a shift in the automatic transmission (2) into a lower gear while in the manual mode, and the shift into the lower gear is executed while the engine speed is elevated, the control apparatus **characterized by** comprising:

> a common rail (9) that stores high-pressure fuel to be injected into the diesel engine (1), and
> a control portion for executing standby control to increase the maximum injection quantity by a correction of a fuel pressure in the common rail (9), between the time there is a command to shift the automatic transmission (2) into the lower gear while in the manual mode and the time the automatic transmission (2) is placed in the neutral state;
> wherein the correction includes at least control to increase the fuel pressure in the common rail (9).

2. The control apparatus according to claim 1, wherein the standby control includes control to increase the maximum injection quantity by repeating the correction of the at least one parameter.

3. The control apparatus according to claim 1, wherein: control to increase the fuel pressure in the common rail (9) includes control to increase the fuel pressure to a target pressure that is set in advance; and a value of the target pressure is set with a value when the fuel injection quantity in the diesel engine (1) is at the maximum injection quantity as an upper limit

4. The control apparatus according to claim 1, wherein: control to increase the fuel pressure in the common rail (9) includes control to increase the fuel pressure to a target pressure that is set in advance; and a value of the target pressure is set to a value when the fuel injection quantity in the diesel engine (1) is at the maximum injection quantity.

5. A control apparatus for a vehicle i) which is provided with a diesel engine (1) in which a fuel injection quantity is limited to at most a maximum injection quantity that is variably set based on various parameters related to engine operation, and an automatic transmission (2) which is connected to the diesel engine (1) and inputs rotation from the engine (1), as well as establishes a plurality of gears, each having a different gear ratio, by selectively applying a plurality of apply elements, and ii) in which a gear shift mode of the automatic transmission (2) is able to be switched between an automatic mode in which the gear is shifted automatically according to a running state of the vehicle and a manual mode in which the gear is shifted in response to a manual shift operation, and iii) in which an engine speed is increased by increasing the fuel injection quantity to the maximum injection quantity after the automatic transmission (2) is in a neutral state during a shift in the automatic transmission (2) into a lower gear while in the manual mode, and the shift into the lower gear is executed while the engine speed is elevated, the control apparatus **characterized by** comprising:

> an intake mechanism which draws intake air into the diesel engine (1) via an intake passage (4) and variably changes the intake air amount, and
> a control portion for executing standby control to increase the maximum injection quantity by a correction of an intake pressure in the intake passage (4), between the time there is a command to shift the automatic transmission (2) into the lower gear while in the manual mode and the time the automatic transmission (2) is placed in the neutral state;
> wherein the correction includes control to drive the intake mechanism so as to increase the intake air amount.

6. The control apparatus according to claim 5, wherein: the intake mechanism includes an EGR mechanism which forces some exhaust gas from the diesel engine (1) to flow into the intake passage (4) and variably changes an EGR amount which is the amount of that exhaust gas; and the control to drive the intake mechanism so as to increase the intake air amount includes control to drive the EGR mechanism so as to reduce the EGR amount.

7. The control apparatus according to claim 5 or 6, wherein: the intake mechanism includes a throttle valve (7) that is selectively operated open and closed to variably change an airflow area of the intake passage (4) of the diesel engine (1); and the control to drive the intake mechanism so as to increase the intake air amount includes control to drive the throttle valve (7) open.

8. A control method for a vehicle i) which is provided with a diesel engine (1) in which a fuel injection quantity is limited to at most a maximum injection quantity that is variably set based on various parameters related to engine operation and an automatic transmission (2) which is connected to the diesel engine (1) and inputs rotation from the engine (1), as well as establishes a plurality of gears, each having a different gear ratio, by selectively applying a plurality of apply elements, and ii) in which a gear shift mode of the automatic transmission (2) is able to be switched between an automatic mode in which the gear is shifted automatically according to a running state of the vehicle and a manual mode in which the gear is shifted in response to a manual shift operation, the control method **characterized by** comprising:

increasing an engine speed by increasing the fuel injection quantity to the maximum injection quantity after the automatic transmission (2) is in a neutral state during a shift in the automatic transmission (2) into a lower gear in the manual mode;
executing the shift into the lower gear while the engine speed is elevated; and
increasing the maximum injection quantity by a correction of a fuel pressure in a common rail (9) that is provided in the vehicle and stores high-pressure fuel to be injected into the diesel engine (1), between the time there is a command to shift the automatic transmission (2) into the lower gear while in the manual mode and the time the automatic transmission (2) is placed in the neutral state;
wherein the correction includes at least increasing the fuel pressure in the common rail (9).

**9.** A control method for a vehicle i) which is provided with a diesel engine (1) in which a fuel injection quantity is limited to at most a maximum injection quantity that is variably set based on various parameters related to engine operation and an automatic transmission (2) which is connected to the diesel engine (1) and inputs rotation from the engine (1), as well as establishes a plurality of gears, each having a different gear ratio, by selectively applying a plurality of apply elements, and ii) in which a gear shift mode of the automatic transmission (2) is able to be switched between an automatic mode in which the gear is shifted automatically according to a running state of the vehicle and a manual mode in which the gear is shifted in response to a manual shift operation, the control method **characterized by** comprising:

increasing an engine speed by increasing the fuel injection quantity to the maximum injection quantity after the automatic transmission (2) is in a neutral state during a shift in the automatic transmission (2) into a lower gear in the manual mode;

executing the shift into the lower gear while the engine speed is elevated; and
increasing the maximum injection quantity by a correction of an intake pressure in an intake passage (4) of an intake mechanism which is provided in the vehicle, draws air into the diesel engine (1) via the intake passage (4), and variably changes the intake air amount, between the time there is a command to shift the automatic transmission (2) into the lower gear while in the manual mode and the time the automatic transmission (2) is placed in the neutral state;
wherein the correction includes increasing the intake air amount

**Patentansprüche**

**1.** Steuervorrichtung für ein Fahrzeug, i) das ausgestattet ist mit: einem Dieselmotor (1), in dem eine Kraftstoff-Einspritzmenge auf höchstens eine maximale, auf Basis verschiedener Parameter in Bezug auf einen Motorbetrieb variabel eingestellte Einspritzmenge begrenzt ist, und einem automatischen Getriebe (2), das mit dem Dieselmotor (1) verbunden ist und sowohl eine Drehung vom Motor (1) aufnimmt als auch durch selektives Anlegen einer Vielzahl von Beaufschlagungselementen eine Vielzahl von Gängen einrichtet, die jeweils eine andere Übersetzung aufweisen, und ii) in dem ein Gangwechselmodus des automatischen Getriebes (2) zwischen einem automatischen Modus, in dem der Gang entsprechend einem Fahrzustand des Fahrzeugs automatisch gewechselt wird, und einem manuellen Modus, in dem der Gang ansprechend auf eine manuelle Schaltbetätigung gewechselt wird, umgeschaltet werden kann, und iii) in dem im manuellen Modus während eines Wechsels in einen niedrigeren Gang im automatischen Getriebe (2) eine Motordrehzahl durch Erhöhen der Kraftstoff-Einspritzmenge auf die maximale Einspritzmenge erhöht wird, nachdem das automatische Getriebe (2) eine Neutralstellung eingenommen hat, und der Wechsel in einen niedrigeren Gang durchgeführt wird, während die Motordrehzahl erhöht ist, wobei die Steuervorrichtung **dadurch gekennzeichnet ist, dass** sie aufweist:

eine Common Rail (9), in der unter hohem Druck stehender Kraftstoff, der in den Dieselmotor (1) eingespritzt werden soll, gespeichert ist, und
einen Steuerabschnitt zum Ausführen einer Bereitschaftssteuerung, um im manuellen Modus zwischen einem Zeitpunkt, zu dem ein Befehl zum Wechsel in einen niedrigeren Gang im automatischen Getriebe (2) vorliegt, und einem Zeitpunkt, zu dem das automatische Getriebe (2) in die Neutralstellung gebracht ist, durch eine Korrektur eines Kraftstoffdrucks in der Common Rail (9) die maximale Einspritzmenge zu erhöhen;

wobei die Korrektur mindestens eine Steuerung einschließt, mit der der Kraftstoffdruck in der Common Rail (9) erhöht wird.

2. Steuervorrichtung nach Anspruch 1, wobei die Bereitschaftssteuerung eine Steuerung aufweist, um die maximale Einspritzmenge durch Wiederholen der Korrektur des mindestens einen Parameters zu erhöhen.

3. Steuervorrichtung nach Anspruch 1, wobei die Steuerung zur Erhöhung des Kraftstoffdrucks in der Common Rail (9) eine Steuerung zur Erhöhung des Kraftstoffdrucks auf einen vorab eingestellten Zieldruck aufweist; und

ein Wert für den Zieldruck auf einen Wert, bei dem die Kraftstoff-Einspritzmenge im Dieselmotor (1) die maximale Einspritzmenge ist, als oberer Grenzwert eingestellt ist.

4. Steuervorrichtung nach Anspruch 1, wobei die Steuerung zur Erhöhung des Kraftstoffdrucks in der Common Rail (9) eine Steuerung zur Erhöhung des Kraftstoffdrucks auf einen vorab eingestellten Zieldruck aufweist; und

ein Wert für den Zieldruck auf einen Wert, bei dem die Kraftstoff-Einspritzmenge im Dieselmotor (1) die maximale Einspritzmenge ist, eingestellt ist.

5. Steuervorrichtung für ein Fahrzeug, i) das ausgestattet ist mit: einem Dieselmotor (1), in dem eine Kraftstoff-Einspritzmenge auf höchstens eine maximale, auf Basis verschiedener Parameter in Bezug auf einen Motorbetrieb variabel eingestellte Einspritzmenge begrenzt ist, und einem automatischen Getriebe (2), das mit dem Dieselmotor (1) verbunden ist und sowohl eine Drehung vom Motor (1) aufnimmt als auch durch selektives Anlegen einer Vielzahl von Beaufschlagungselementen eine Vielzahl von Gängen einrichtet, die jeweils eine andere Übersetzung aufweisen, und ii) in dem ein Gangwechselmodus des automatischen Getriebes (2) zwischen einem automatischen Modus, in dem der Gang entsprechend einem Fahrzustand des Fahrzeugs automatisch gewechselt wird, und einem manuellen Modus, in dem der Gang ansprechend auf eine manuelle Schaltbetätigung gewechselt wird, umgeschaltet werden kann, und iii) in dem im manuellen Modus während eines Wechsels in einen niedrigeren Gang im automatischen Getriebe (2) eine Motordrehzahl durch Erhöhen der Kraftstoff-Einspritzmenge auf die maximale Einspritzmenge erhöht wird, nachdem das automatische Getriebe (2) eine Neutralstellung eingenommen hat, und der Wechsel in einen niedrigeren Gang durchgeführt wird, während die Motordrehzahl erhöht ist, wobei die Steuervorrichtung **da-**

**durch gekennzeichnet ist, dass** sie aufweist:

einen Ansaugmechanismus, der Ansaugluft über einen Ansaugkanal (4) in den Dieselmotor (1) saugt und die Ansaugluftmenge variabel ändert, und

einen Steuerabschnitt zum Ausführen einer Bereitschaftssteuerung, um im manuellen Modus zwischen einem Zeitpunkt, zu dem ein Befehl zum Wechsel in einen niedrigeren Gang im automatischen Getriebe (2) vorliegt, und einem Zeitpunkt, zu dem das automatische Getriebe (2) in die Neutralstellung gebracht ist, durch eine Korrektur eines Ansaugdrucks im Ansaugkanal (4) die maximale Einspritzmenge zu erhöhen;

wobei die Korrektur eine Steuerung einschließt, um den Ansaugmechanismus so anzusteuern, dass er die Ansaugluftmenge erhöht.

6. Steuervorrichtung nach Anspruch 5, wobei der Ansaugmechanismus einen AGR-Mechanismus aufweist, der ein Abgas teilweise aus dem Dieselmotor (1) treibt, damit dieses in den Ansaugkanal (4) strömt, und der eine AGR-Menge, bei der es sich um die Menge dieses Abgases handelt, variabel ändert; und

wobei die Steuerung zum Ansteuern des Ansaugmechanismus, um die Ansaugluftmenge zu erhöhen, eine Steuerung aufweist, um den AGR-Mechanismus so anzusteuern, dass dieser die AGR-Menge verringert.

7. Steuervorrichtung nach Anspruch 5 oder 6, wobei der Ansaugmechanismus eine Drosselklappe (7) aufweist, die selektiv auf und zu gesteuert wird, um einen Strömungsquerschnitt des Ansaugkanals (4) des Dieselmotors (1) variabel zu ändern; und

die Steuerung zum Ansteuern des Ansaugmechanismus, um die Ansaugluftmenge zu erhöhen, eine Steuerung aufweist, um die Drosselklappe (7) auf zu steuern.

8. Steuerverfahren für ein Fahrzeug, i) das ausgestattet ist mit: einem Dieselmotor (1), in dem eine Kraftstoff-Einspritzmenge auf höchstens eine maximale, auf Basis verschiedener Parameter in Bezug auf einen Motorbetrieb variabel eingestellte Einspritzmenge begrenzt ist, und einem automatischen Getriebe (2), das mit dem Dieselmotor (1) verbunden ist und sowohl eine Drehung vom Motor (1) aufnimmt als auch durch selektives Anlegen einer Vielzahl von Beaufschlagungselementen eine Vielzahl von Gängen einrichtet, die jeweils eine andere Übersetzung aufweisen, und ii) in dem ein Gangwechselmodus des automatischen Getriebes (2) zwischen einem automatischen Modus, in dem der Gang entsprechend einem Fahrzustand des Fahrzeugs automatisch gewechselt wird, und einem manuellen Modus, in dem der Gang ansprechend auf eine manuelle Schaltbetätigung gewechselt wird, umgeschaltet werden kann, wobei das Steuerverfahren **dadurch gekennzeichnet ist, dass** es umfasst:

Erhöhen einer Motordrehzahl im manuellen Modus, während ein Wechsel in einen niedrigeren Gang im automatischen Getriebe (2) durchgeführt wird, durch Erhöhen der Kraftstoff-Einspritzmenge auf die maximale Einspritzmenge, nachdem das automatische Getriebe (2) eine Neutralstellung eingenommen hat,
Durchführen des Wechsels in einen niedrigeren Gang, während die Motordrehzahl erhöht ist, und
Erhöhen der maximalen Einspritzmenge im manuellen Modus durch eine Korrektur eines Kraftstoffdrucks in einer Common Rail (9) zwischen dem Zeitpunkt, zu dem ein Befehl zum Wechsel in einen niedrigeren Gang des automatischen Getriebes (2) vorliegt, und dem Zeitpunkt, zu dem das automatische Getriebe (2) in die Neutralstellung gebracht ist;
wobei die Korrektur zumindest eine Erhöhung des Kraftstoffdrucks in der Common Rail (9) einschließt.

9. Steuerverfahren für ein Fahrzeug, i) das ausgestattet ist mit: einem Dieselmotor (1), in dem eine Kraftstoff-Einspritzmenge auf höchstens eine maximale, auf Basis verschiedener Parameter in Bezug auf einen Motorbetrieb variabel eingestellte Einspritzmenge begrenzt ist, und einem automatischen Getriebe (2), das mit dem Dieselmotor (1) verbunden ist und sowohl eine Drehung vom Motor (1) aufnimmt als auch durch selektives Anlegen einer Vielzahl von Beaufschlagungselementen eine Vielzahl von Gängen einrichtet, die jeweils eine andere Übersetzung aufweisen, und ii) in dem ein Gangwechselmodus des automatischen Getriebes (2) zwischen einem automatischen Modus, in dem der Gang entsprechend einem Fahrzustand des Fahrzeugs automatisch gewechselt wird, und einem manuellen Modus, in dem der Gang ansprechend auf eine manuelle Schaltbetätigung gewechselt wird, umgeschaltet werden kann, wobei das Steuerverfahren **dadurch gekennzeichnet ist, dass** es umfasst:

Erhöhen einer Motordrehzahl im manuellen Modus durch Erhöhen der Kraftstoff-Einspritzmenge auf die maximale Einspritzmenge, nachdem das automatische Getriebe (2) während eines Wechsels in einen niedrigeren Gang im Automatikgetriebe (2) eine Neutralstellung einnimmt,
Durchführen eines Wechsels in einen niedrigeren Gang, während die Motordrehzahl erhöht ist, und

Erhöhen der maximalen Einspritzmenge durch eine Korrektur eines Kraftstoffdrucks in einem Ansaugkanal (4) eines Ansaugmechanismus, der im Fahrzeug vorgesehen ist, der über den Ansaugkanal (4) Luft in den Dieselmotor (1) zieht und der im manuellen Modus die Ansaugluftmenge zwischen dem Zeitpunkt, zu dem ein Befehl zum Wechsel in einen niedrigeren Gang im automatischen Getriebe (2) vorliegt, und dem Zeitpunkt, zu dem das automatische Getriebe (2) in die Neutralstellung gebracht ist, erhöht; wobei die Korrektur eine Erhöhung der Ansaugluftmenge einschließt.

## Revendications

1. Appareil de contrôle pour un véhicule (i) qui est prévu avec un moteur diesel (1) dans lequel une quantité d'injection de carburant est limitée au maximum, à une quantité d'injection maximum qui est réglée de manière variable en fonction de différents paramètres liés au fonctionnement du moteur, et une transmission automatique (2) qui est raccordée au moteur diesel (1) et introduit la rotation provenant du moteur (1), établit également une pluralité de vitesses, ayant chacun un rapport de vitesse différent, en appliquant sélectivement une pluralité d'éléments d'application, et ii) dans lequel un mode de changement de vitesse de la transmission automatique (2) peut être commuté entre un mode automatique dans lequel le changement de vitesse est automatique selon un état de roulement du véhicule et un mode manuel dans lequel le changement de vitesse est effectué en réponse à une opération de changement de vitesse manuelle, et iii) dans lequel une vitesse du moteur est augmentée en augmentant la quantité d'injection de carburant à la quantité d'injection maximum après que la transmission automatique (2) a été dans un état neutre pendant un changement de vitesse dans la transmission automatique (2) à une vitesse inférieure tout en étant en mode manuel, et le changement de vitesse à la vitesse inférieure est réalisé alors que la vitesse du moteur augmente, l'appareil de contrôle étant **caractérisé en ce qu'**il comprend :

une rampe commune (9) qui stocke le carburant à haute pression à injecter dans le moteur diesel (1), et
une partie de contrôle pour exécuter le contrôle d'attente afin d'augmenter la quantité d'injection maximum selon une correction d'une pression de carburant dans la rampe commune (9), entre le moment où il y a une commande de faire passer la transmission automatique (2) à la vitesse inférieure tout en étant en mode manuel et le moment où la transmission automatique (2) est placée à l'état neutre ;

dans lequel la correction comprend au moins un contrôle pour augmenter la pression de carburant dans la rampe commune (9).

2. Appareil de contrôle selon la revendication 1, dans lequel le contrôle d'attente comprend le contrôle pour augmenter la quantité d'injection maximum en répétant la correction du au moins un paramètre.

3. Appareil de contrôle selon la revendication 1, dans lequel : le contrôle pour augmenter la pression de carburant dans la rampe commune (9) comprend le contrôle pour augmenter la pression de carburant à une pression cible qui est réglée à l'avance ; et une valeur de la pression cible est réglée avec une valeur lorsque la quantité d'injection de carburant dans le moteur diesel (1) est à la quantité d'injection maximum en tant que limite supérieure.

4. Appareil de contrôle selon la revendication 1, dans lequel : le contrôle pour augmenter la pression de carburant dans la rampe commune (9) comprend le contrôle pour augmenter la pression de carburant à une pression cible qui est réglée à l'avance ; et une valeur de la pression cible est réglée à une valeur lorsque la quantité d'injection de carburant dans le moteur diesel (1) est à la quantité d'injection maximum.

5. Appareil de contrôle pour un véhicule i) qui est prévu avec un moteur diesel (1) dans lequel une quantité d'injection de carburant est limitée au maximum à une quantité d'injection maximum qui est réglée de manière variable en fonction de différents paramètres liés au fonctionnement du moteur, et une transmission automatique (2) qui est raccordée au moteur diesel (1) et introduit la rotation provenant du moteur (1), établit également une pluralité de vitesses, chacun ayant un rapport de vitesse différent en appliquant sélectivement une pluralité d'éléments d'application, et ii) dans lequel un mode de changement de vitesse de la transmission automatique (2) peut être commuté entre un mode automatique dans lequel le changement de vitesse a lieu automatiquement selon un état de roulement du véhicule et un mode manuel dans lequel le changement de vitesse a lieu en réponse à une opération de changement de vitesse manuelle, et iii) dans lequel une vitesse du moteur est augmentée en augmentant la quantité d'injection de carburant à la quantité d'injection maximum après que la transmission automatique (2) a été dans un état neutre pendant un changement de vitesse dans la transmission automatique (2) à une vitesse inférieure tout en étant dans le mode manuel, et le changement de vitesse à la vitesse inférieure est réalisé alors que la vitesse du moteur augmente, l'appareil de contrôle étant **caractérisé en ce qu'**il comprend :

un mécanisme d'admission qui aspire l'air d'admission dans le moteur diesel (1) via un passage d'admission (4) et modifie de manière variable la quantité d'air d'admission, et une partie de contrôle pour réaliser le contrôle d'attente afin d'augmenter la quantité d'injection maximum selon une correction d'une pression d'admission dans le passage d'admission (4), entre le moment où il y a une commande pour commuter la transmission automatique (2) à la vitesse inférieure tout en étant dans le mode manuel, et le moment où la transmission automatique (2) est placée à l'état neutre ; dans lequel la correction comprend le contrôle afin d'entraîner le mécanisme d'admission pour augmenter la quantité d'air d'admission.

6. Appareil de contrôle selon la revendication 5, dans lequel :

le mécanisme d'admission comprend un mécanisme de EGR qui force une certaine partie des gaz d'échappement provenant du moteur diesel (1) à s'écouler dans le passage d'admission (4) et modifie de manière variable une quantité de EGR qui est la quantité de ces gaz d'échappement ; et le contrôle pour entraîner le mécanisme d'admission afin d'augmenter la quantité d'air d'admission comprend le contrôle pour entraîner le mécanisme de EGR afin de réduire la quantité de EGR.

7. Appareil de contrôle selon la revendication 5 ou 6, dans lequel :

le mécanisme d'admission comprend un papillon des gaz (7) qui est sélectivement ouvert et fermé pour modifier de manière variable une zone d'écoulement d'air du passage d'admission (4) du moteur diesel (1) ; et le contrôle pour entraîner le mécanisme d'admission afin d'augmenter la quantité d'air d'admission comprend le contrôle pour entraîner l'ouverture du papillon des gaz (7).

8. Procédé de contrôle pour un véhicule i) qui est prévu avec un moteur diesel (1) dans lequel une quantité d'injection de carburant est limitée au maximum à une quantité d'injection maximum qui est déterminée de manière variable en fonction de différents paramètres liés au fonctionnement du moteur et à une transmission automatique (2) qui est raccordée au moteur diesel (1) et introduit la rotation provenant du moteur (1) ; établit également une pluralité de vitesses, ayant chacun un rapport de vitesse différent, en appliquant sélectivement une pluralité d'éléments d'application, et ii) dans lequel un mode de changement de vitesse de la transmission automatique (2) peut être commuté entre un mode automatique dans lequel le changement de vitesse a lieu automatiquement selon un état de roulement du véhicule et un mode manuel dans lequel le changement de vitesse a lieu en réponse à une opération de changement de vitesse manuelle, le procédé de contrôle étant **caractérisé en ce qu'**il comprend les étapes consistant à :

augmenter une vitesse de moteur en augmentant la quantité d'injection de carburant à la quantité d'injection maximum après que la transmission automatique (2) a été dans un état neutre pendant un changement de vitesse dans la transmission automatique (2) à une vitesse inférieure dans le mode manuel ;

réaliser le changement de vitesse à la vitesse inférieure alors que la vitesse du moteur augmente ; et

augmenter la quantité d'injection maximum par une correction d'une pression de carburant dans une rampe commune (9) qui est prévue dans le véhicule et stocke le carburant à haute pression à injecter dans le moteur diesel (1), entre le moment où il y a une commande pour commuter la transmission automatique (2) à la vitesse inférieure tout en étant dans le mode manuel et le moment où la transmission automatique (2) est placée à l'état neutre ;

dans lequel la correction comprend au moins l'étape consistant à augmenter la pression de carburant dans la rampe commune (9).

9. Procédé de contrôle pour un véhicule i) qui est prévu avec un moteur diesel (1) dans lequel une quantité d'injection de carburant est limitée au maximum à une quantité d'injection maximum qui est déterminée de manière variable en fonction de différents paramètres liés au fonctionnement du moteur et une transmission automatique (2) qui est raccordée au moteur diesel (1) et introduit la rotation provenant du moteur (1), établit également une pluralité de vitesses, chacun ayant un rapport de vitesse différent, en appliquant sélectivement une pluralité d'éléments d'application, et ii) dans lequel un mode de changement de vitesse de la transmission automatique (2) peut être commuté entre un mode automatique dans lequel le changement de vitesse a lieu automatiquement selon un état de roulement du véhicule et un mode manuel dans lequel le changement de vitesse a lieu en réponse à une opération de changement de vitesse manuel, le procédé de contrôle étant **caractérisé en ce qu'**il comprend les étapes consistant à :

augmenter une vitesse du moteur en augmentant la quantité d'injection de carburant à la quantité d'injection maximum après que la transmission automatique (2) a été dans un état neutre pendant un changement de vitesse dans la transmission automatique (2) à une vitesse inférieure dans le mode manuel ;

réaliser le changement de vitesse à la vitesse inférieure alors que la vitesse du moteur augmente ; et

augmenter la quantité d'injection maximum par une correction de la pression d'admission dans un passage d'admission (4) d'un mécanisme d'admission qui est prévu dans le véhicule, aspire l'air dans le moteur diesel (1) via le passage d'admission (4), et modifie de manière variable la quantité d'air d'admission, entre le moment où il y a une commande pour commuter la transmission automatique (2) à la vitesse inférieure tout en étant dans le mode manuel, et le moment où la transmission automatique (2) est placée à l'état neutre ;

dans lequel la correction comprend l'étape consistant à augmenter la quantité d'air d'admission.

# FIG. 1

# F I G . 2

# F I G . 3

| | C1 | C2 | B1 | B2 | B3 | F |
|---|---|---|---|---|---|---|
| REVERSE | | | | O | O | |
| 1ST GEAR | O | | | ◎ | | O |
| 2ND GEAR | O | | O | | | |
| 3RD GEAR | O | | | | O | |
| 4TH GEAR | O | O | | | | |
| 5TH GEAR | | O | | | O | |
| 6TH GEAR | | O | O | | | |

# FIG.4

Injection Quantity Command Value Qfin vs Engine Speed chart

INJECTION QUANTITY COMMAND VALUE Qfin

TARGET PRESSURE INCREASE

ENGINE SPEED

# FIG.5

HIGH

(a) RELEASE-SIDE HYDRAULIC PRESSURE

LOW

(b) APPLY-SIDE HYDRAULIC PRESSURE

LOW

COMPLETELY APPLIED

(c) ENGINE SPEED

T1    TIME

# FIG.6

(a) DOWNSHIFT OPERATION

YES

NO

(b) RELEASE-SIDE HYDRAULIC PRESSURE

HIGH

LOW

(c) INJECTION QUANTITY COMMAND VALUE Qfin

MAXIMUM INJECTION QUANTITY Qfull

(d) ENGINE SPEED

NE1

(e) APPLY-SIDE HYDRAULIC PRESSURE

COMPLETELY APPLIED

LOW

STANDBY PERIOD

T2    T3    T4    T5 T6    T7    TIME

# FIG.7

(a) DOWNSHIFT OPERATION

YES

NO

(b) RELEASE-SIDE HYDRAULIC PRESSURE

HIGH

LOW

STANDBY PERIOD

(c) STANDBY CONTROL

ON

OFF

TARGET PRESSURE

(d) RAIL PRESSURE

(e) EGR VALVE OPENING AMOUNT

FULLY CLOSED

FULLY OPEN

(f) THROTTLE VALVE OPENING AMOUNT

T2    T3    TIME

24

# FIG.8

INJECTION QUANTITY COMMAND VALUE Qfin (MAXIMUM INJECTION QUANTITY Qfull)

TARGET PRESSURE INCREASE

ENGINE SPEED

# FIG.9

(a) RAIL PRESSURE

———— WITH STANDBY CONTROL

----- WITHOUT STANDBY CONTROL

(b) ENGINE SPEED

STANDBY PERIOD

TIME

SET INJECTION QUANTITY COMMAND VALUE Qfin TO MAXIMUM INJECTION QUANTITY Qfull

# F I G . 10

(a) EGR VALVE
OPENING AMOUNT

FULLY
CLOSED

——— WITH STANDBY
CONTROL

----- WITHOUT STANDBY
CONTROL

(b) ENGINE
SPEED

STANDBY
PERIOD

TIME

SET INJECTION QUANTITY
COMMAND VALUE Qfin TO MAXIMUM
INJECTION QUANTITY Qfull

# FIG.11

(a) THROTTLE VALVE OPENING AMOUNT

FULLY OPEN

——— WITH STANDBY CONTROL

----- WITHOUT STANDBY CONTROL

(b) ENGINE SPEED

STANDBY PERIOD

TIME

SET INJECTION QUANTITY COMMAND VALUE Qfin TO MAXIMUM INJECTION QUANTITY Qfull

# FIG. 12

MANUAL DOWNSHIFT
EXECUTION ROUTINE

S101

IS
SPEED INCREASE
FLAG F1 = 0 (I.E., IS ENGINE
SPEED NOT BEING
INCREASED) ?

NO

YES

S102

IS THERE
A DOWNSHIFT OPERATION
AND IS THE DOWNSHIFT
INCOMPLETE ?

NO

YES    S103

EXECUTE RELEASE PROCESS

S104

IS RELEASE
COMPLETE ?

NO

YES    S106

SET SPEED INCREASE
FLAG F1 ← 1 (I.E., ENGINE
SPEED BEING INCREASED)

S105

EXECUTE STANDBY
CONTROL

1

END

# FIG. 13

①

S107

SET INJECTION QUANTITY COMMAND
VALUE Qfin TO MAXIMUM INJECTION
QUANTITY Qfull Qfin ← Qfull

S108

IS ENGINE SPEED ≥ NE1 ? — NO

YES

S109

EXECUTE APPLY PROCESS

S110

IS APPLICATION
COMPLETE ? — NO

YES

S111

SET SPEED INCREASE
FLAG F1 ← 0 (I.E., ENGINE
SPEED NOT BEING INCREASED)

S112

RETURN TO NORMAL FUEL
INJECTION CONTROL

END

**EP 1 975 030 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10281276 A
- EP 1413724 A
- WO 200603116 A
- FR 2795773